(19) 

Europäisches
Patentamt
European
Patent Office
Office européen
des brevets

(11) **EP 4 539 567 A1**

(12) **EUROPEAN PATENT APPLICATION**
published in accordance with Art. 153(4) EPC

(43) Date of publication:
**16.04.2025 Bulletin 2025/16**

(21) Application number: **22961689.1**

(22) Date of filing: **11.10.2022**

(51) International Patent Classification (IPC):
**H04W 64/00** (2009.01)

(52) Cooperative Patent Classification (CPC):
**H04W 64/00**

(86) International application number:
**PCT/CN2022/124723**

(87) International publication number:
**WO 2024/077496 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **LI, Dejian
  Shenzhen, Guangdong 518129 (CN)**
• **GAO, Lei
  Shenzhen, Guangdong 518129 (CN)**
• **CHENG, Xingqing
  Shenzhen, Guangdong 518129 (CN)**
• **WANG, Jian
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **MEASUREMENT METHOD AND MEASUREMENT APPARATUS**

(57) A distance measurement method and apparatus in the communication field are provided. Two devices separately obtain an interval between a time point at which one of the two devices sends a ranging symbol and a time point at which the device receives a ranging symbol sent by the other device, and an interval between a time point at which the other device sends the ranging symbol and a time point at which the other device receives the ranging symbol sent by the one device; and determine a distance between the two devices based on a difference between the two time intervals. Because the obtained time interval is determined based on a receiving time and a sending time of the ranging symbol, accuracy of the time interval can be improved, so that accuracy of the distance obtained through measurement can be improved.

FIG. 3

**Description**

**TECHNICAL FIELD**

Embodiments of this application relate to the communication field, and in particular, to a measurement method and a measurement apparatus.

**BACKGROUND**

Many scenarios in the communication field have the following requirement: measuring a distance between communication apparatuses to determine a distance between objects associated with the communication apparatuses. For example, in an indoor positioning scenario, a distance between communication apparatuses needs to be measured to implement positioning of a device associated with the device. For another example, in a keyless entry and startup scenario, a distance between a vehicle key and a vehicle needs to be measured. For still another example, in a scenario such as asset management or logistics, a distance between objects also needs to be measured.

In an existing measurement method, a distance between devices is determined based on a sending time and a receiving time of a subframe transmitted between the devices. A time length of one subframe is 1 millisecond. In many scenarios, this measurement method cannot meet a requirement for measurement accuracy in many scenarios.

**SUMMARY**

For a technical problem of inaccurate measurement of a distance between devices, this application provides a measurement method, a measurement apparatus, a measurement device, a computer-readable storage medium, a computer program product, and the like, to improve accuracy of measuring a distance between devices.

According to a first aspect, this application provides a measurement method. The method includes: A first device sends a first symbol; the first device receives a second symbol from a second device, where the first symbol and the second symbol are carried on a same radio frame or different radio frames; and the first device determines a first time difference, where the first time difference is a time interval between a first moment at which the first device sends the first symbol and a second moment at which the first device receives the second symbol, and the first time difference is used to determine a distance between the first device and the second device.

In the method, both the first symbol and the second symbol may be referred to as ranging symbols.

The first device may send one or more first symbols, and the second device may send one or more second symbols.

The first device may be a master node, and the second device may be a slave node; or the first device may be a slave node, and the second device may be a master node. The master node may also be referred to as a management node, and may be referred to as a G node for short. The slave node may be referred to as a managed node, and is referred to as a T node for short.

When the first device is a master node and the second device is a slave node, the first symbol may be referred to as a G link ranging symbol, and the second symbol may be referred to as a T link ranging symbol. When the first device is a slave node and the second device is a master node, the first symbol may be referred to as a T link ranging symbol, and the second symbol may be referred to as a G link ranging symbol.

In this method, a sequence of sending the first symbol by the first device and receiving the second symbol by the first device is not limited, that is, a sequence of the first moment and the second moment is not limited. In other words, the first device may first send the first symbol and then receive the second symbol, or the first device may first receive the second symbol and then send the first symbol.

In this method, compared with an interval between a sending time and a receiving time of a radio frame, because the first time difference is an interval between a sending time and a receiving time of a ranging symbol, and can more accurately indicate transmission duration of a signal between the devices, a more accurate inter-device distance can be determined based on the first time difference.

In some implementations, the method may further include: The first device receives first time information from the second device, where the first time information is used to determine a second time difference, and the second time difference is a time interval between a third moment at which the second device receives the first symbol and a fourth moment at which the second device sends the second symbol; and the first device determines the distance between the first device and the second device based on the first time difference and the second time difference.

In other words, after determining the third moment at which the second device receives the first symbol and the fourth moment at which the second device sends the second symbol, the second device sends second time information to the first device, so that the first device learns of the third moment and the fourth moment and determines the second time difference. The first device determines the distance between the first device and the second device based on the first time difference and the second time difference.

In this implementation, a sequence of receiving the second time information by the first device and determining the first time difference by the first device is not limited.

In some implementations, the method may further include: The first device sends time information to the second device, where the time information is used to determine the first time difference, and the first time difference is the time interval between the first moment at which the first device sends the first symbol and the second moment at which the first device receives the second symbol.

In the method, the first device sends, to the second device, the time information used to determine the first time difference, so that the second device can determine the distance between the first device and the second device based on the first time difference and the second time difference.

In this implementation, a sequence of receiving the second time information by the first device and determining the first time difference by the first device is not limited.

With reference to the first aspect or any one of the foregoing possible implementations, in some possible implementations, the first symbol and/or the second symbol are/is generated based on a ZC sequence, and the ZC sequence is generated in the following manner:

$$d(n) = \begin{cases} exp\left(-j\frac{\pi un(n+1)}{41}\right), n = 0,1,\dots,18 \\ 0, n = 19 \\ exp\left(-j\frac{\pi un(n+1)}{41}\right), n = 20,21,\dots,38 \end{cases},$$

where

n represents a subcarrier sequence number, u is a preset value, and $d(n)$ represents a ZC sequence on an $n^{th}$ subcarrier.

In this implementation, optionally, u is any integer from a to b, a is a positive integer greater than 1, b is a positive integer less than 39, and a is less than b.

In some possible implementations, the first symbol may be carried on a resource that is in the radio frame and that is used to transmit a G link symbol and/or a resource that is in the radio frame and that is used to transmit an SG symbol, and the second symbol may be carried on a resource that is in the radio frame and that is used to transmit an ST symbol and/or a resource that is in the radio frame and that is used to transmit a T link symbol.

For example, when the first device is a master node and the second device is a slave node, the first symbol may be carried on the resource that is in the radio frame and that is used to transmit the G link symbol and/or the resource that is in the radio frame and that is used to transmit the SG symbol, and the second symbol may be carried on the resource that is in the radio frame and that is used to transmit the ST symbol and/or the resource that is in the radio frame and that is used to transmit the T link symbol.

Optionally, the first symbol may be carried on all or some resources that are in the radio frame and that are used to transmit the G link symbol. If the first symbol is carried on some resources that are in the radio frame and that are used to transmit the G link symbol, the radio frame may further include a G link symbol.

Optionally, the second symbol may be carried on all or some resources that are in the radio frame and that are used to transmit the T link symbol. If the second symbol is carried on some resources that are in the radio frame and that are used to transmit the T link symbol, the radio frame may further include a T link symbol.

In some other possible implementations, the second symbol may be carried on the resource that is in the radio frame and that is used to transmit the G link symbol and/or the resource that is in the radio frame and that is used to transmit the SG symbol, and the first symbol may be carried on the resource that is in the radio frame and that is used to transmit the ST symbol and/or the resource that is in the radio frame and that is used to transmit the T link symbol.

For example, when the second device is a master node and the first device is a slave node, the second symbol may be carried on the resource that is in the radio frame and that is used to transmit the G link symbol and/or the resource that is in the radio frame and that is used to transmit the SG symbol, and the first symbol may be carried on the resource that is in the radio frame and that is used to transmit the ST symbol and/or the resource that is in the radio frame and that is used to transmit the T link symbol.

Optionally, the second symbol may be carried on all or some resources that are in the radio frame and that are used to transmit the G link symbol. If the second symbol is carried on some resources that are in the radio frame and that are used to transmit the G link symbol, the radio frame may further include a T link symbol.

Optionally, the first symbol may be carried on all or some resources that are in the radio frame and that are used to transmit the T link symbol. If the first symbol is carried on some resources that are in the radio frame and that are used to transmit the T link symbol, the radio frame may further include a G link symbol.

In some implementations, a GAP may exist between the first symbol and the second symbol.

For example, when the first symbol and the second symbol are carried on the same radio frame, the first symbol is carried on the resource that is in the radio frame and that is used to transmit the G link symbol and/or the resource that is in the radio frame and that is used to transmit the SG symbol, and the second symbol is carried on the resource that is in the radio frame and that is used to transmit the T link symbol, a GAP exists between the first symbol and the second symbol.

For another example, when the first symbol and the second symbol are carried on the same radio frame, the first symbol is carried on the resource that is in the radio frame and that is used to transmit the T link symbol and/or the resource that is in the radio frame and that is used to transmit the ST symbol, and the second symbol is carried on the resource that is in the radio frame and that is used to transmit the SG symbol and/or the resource that is in the radio frame and that is used to transmit the G link symbol, a GAP exists between the first symbol and the second symbol.

For another example, the first symbol is carried on the resource that is in a first radio frame and that is used to transmit the T link symbol, the second symbol is carried on a resource that is in a second radio frame and that is used to transmit the G link symbol, and when the second radio frame is adjacent to the first radio frame and is located after the first radio frame, a GAP exists between the first symbol and the second symbol.

For another example, the second symbol is carried on the resource that is in the first radio frame and that is used to transmit the T link symbol, the first symbol is carried on the resource that is in the second radio frame and that is used to transmit the G link symbol, and when the second radio frame is adjacent to the first radio frame and is located after the first radio frame, a GAP exists between the first symbol and the second symbol.

In some possible implementations, when the first device receives, from the second device, the first time information used to determine the second time difference, and determines the distance between the first device and the second device based on the first time difference and the second time difference, the method further includes: The first device receives measurement information from the second device, where the measurement information indicates a measurement exchange sequence number corresponding to the first time information.

The measurement exchange sequence number indicates a sequence number that is of a current operation of exchanging the first time information between the first device and the second device and that is in all exchange operations of all time information exchanged between the first device and the second device for determining the distance between the first device and the second device.

In this way, the first device can accurately associate time information obtained by the first device through exchange with the second device with a time difference that is obtained by the first device through measurement and that has a same measurement sequence number, so as to obtain an accurate distance.

In some possible implementations, when the first device sends, to the second device, the first time information used to determine the first time difference, so that the second device determines the distance between the first device and the second device based on the first time difference and the second time difference, the method further includes: The first device sends measurement information to the second device, where the measurement information indicates a measurement sequence number corresponding to the first time information.

The measurement sequence number indicates a sequence number that is of a current operation of exchanging the first time information between the first device and the second device and that is in all exchange operations of all time information exchanged between the first device and the second device for determining the distance between the first device and the second device.

In this way, the second device can accurately associate time information obtained by the second device through exchange with the second device with a time difference that is obtained by the second device through measurement and that has a same measurement sequence number, so as to obtain an accurate distance.

In some implementations, the first symbol may be an $S^{th}$ one in one or more ranging symbols sent by the first device in one distance measurement process, and the second symbol may be an $S^{th}$ one in one or more ranging symbols received by the first device in one distance measurement process.

For example, S is 1. Alternatively, the first device may send N first symbols in one distance measurement process, where the first moment is a sending moment of the 1st first symbol in the N first symbols, and N is a positive integer. The first device may receive M second symbols in this distance measurement process, where the second moment is a receiving moment of the 1st received second symbol in the M second symbols, and M is a positive integer. Correspondingly, the third moment may be a moment at which the second device receives the 1st symbol in the N first symbols, and the fourth moment is a moment at which the second device sends the 1st second symbol in the M second symbols.

In some possible implementations, if the first symbol includes a cyclic prefix (cyclic prefix, CP), the first moment may be a sending moment of a starting point of the CP of the first symbol. Similarly, the third moment may be a moment at which the second device receives the starting point of the CP of the first symbol.

If the first symbol does not include a CP, the first moment is a sending moment of a starting point of the first symbol. Similarly, the third moment may be a moment at which the second device receives the starting point of the first symbol.

If the second symbol includes a CP, the second moment may be a receiving moment of a starting point of the CP of the second symbol. Similarly, the fourth moment may be a moment at which the second device sends the starting point of the CP of the second symbol.

If the second symbol does not include a CP, the second moment is a sending moment at which the first device receives a starting point of the second symbol. Similarly, the fourth moment may be a moment at which the second device sends the starting point of the second symbol.

In some possible implementations, the first moment may be a moment at which the starting point of the first symbol arrives at a first antenna connector of the first device, and the second moment may be a moment at which the starting point of the second symbol arrives at the first antenna connector.

For example, when the first symbol does not include a CP and the second symbol does not include a CP, the first moment is a moment at which the starting point of the first symbol arrives at the first antenna connector of the first device, and the second moment may be a moment at which the starting point of the second symbol arrives at the first antenna connector.

Similarly, the third moment may be a moment at which the starting point of the first symbol arrives at a second antenna connector of the second device, and the fourth moment may be a moment at which the starting point of the second symbol arrives at the second antenna connector of the second device.

For example, when the first symbol does not include a CP and the second symbol does not include a CP, the third moment is a moment at which the starting point of the first symbol arrives at the second antenna connector of the second device, and the fourth moment may be a moment at which the starting point of the second symbol arrives at the second antenna connector.

In some possible implementations, when the first symbol and the second symbol each include a CP, the first moment may be a moment at which the starting point of the CP of the first symbol arrives at the first antenna connector of the first device, and the second moment may be a moment at which the starting point of the CP of the second symbol arrives at the first antenna connector.

Similarly, the third moment may be a moment at which the starting point of the CP of the first symbol arrives at the second antenna connector of the second device, and the fourth moment may be a moment at which the starting point of the CP of the second symbol arrives at the second antenna connector of the second device.

In some possible implementations, the method further includes: The first device sends first configuration information to the second device, where the first configuration information indicates a time-frequency resource of the first symbol and a time-frequency resource of the second symbol.

In other words, the first device configures the time-frequency resource of the first symbol and the time-frequency resource of the second symbol for the second device, so that the second device receives the first symbol based on time-frequency resource information of the first symbol and sends the second symbol based on time-frequency resource information of the second symbol.

In some possible implementations, the method may further include: The first device receives first configuration information from the second device, where the first configuration information indicates a time-frequency resource of the first symbol and a time-frequency resource of the second symbol.

In other words, the second device configures the time-frequency resource of the first symbol and the time-frequency resource of the second symbol for the first device, so that the first device sends the first symbol based on time-frequency resource information of the first symbol and receives the second symbol based on time-frequency resource information of the second symbol.

Optionally, the first configuration information may further include one or more of the following information: a Transaction ID corresponding to measurement, an identifier of a radio frame used to transmit the first symbol and/or the second symbol, first indication information of a first resource that is in the radio frame used to transmit the first symbol and that is used to carry the first symbol, and second indication information of a second resource that is in the radio frame used to transmit the second symbol and that is used to carry the second symbol.

Optionally, when the first configuration information includes the first indication information, the first indication information is a first bitmap. For example, the first bitmap includes R bits, the R bits are in a one-to-one correspondence with R sending resources that are in the radio frame used to transmit the first symbol and that are allocated to the first device, values of bits that are in the R bits and that correspond to the first resource that is in the R sending resources and that is used to transmit the first symbol are first preset values, and R is a positive integer.

For example, values of some bits in the R bits are "1", and a resource corresponding to these bits is used to transmit the first symbol; and values of some bits in the R bits are "0", and a resource corresponding to these bits is not used to transmit the first symbol.

Optionally, when the first configuration information includes the second indication information, the second indication information is a bitmap. For example, the second indication information is K bits, the K bits are in a one-to-one correspondence with K receiving resources that are in the radio frame used to transmit the second symbol and that are allocated to the first device, values of bits that are in the K bits and that correspond to the second resource that is in the K sending resources and that is used to transmit the second symbol are first preset values, and K is a positive integer.

For example, values of some bits in the K bits are "1", and a resource corresponding to these bits is used to transmit the second symbol; and values of some bits in the K bits are "0", and a resource corresponding to these bits is not used to transmit the second symbol.

In some possible implementations, the method further includes: The first device sends a third symbol; and the first device determines a third time difference, where the third time difference is a time interval between the second moment at which the first device receives the second symbol and a fifth moment at which the first device sends the third symbol.

In this implementation, in an example, the first device receives the second time information from the second device, where the second time information is used to determine a fourth time difference, and the fourth time difference is a time interval between the third moment at which the second device sends the second symbol and a sixth moment at which the second device receives the third symbol.

Correspondingly, that the first device determines the distance between the first device and the second device based on the first time difference and the second time difference includes: The first device determines the distance between the first device and the second device based on the first time difference, the second time difference, the third time difference, and the fourth time difference.

In this implementation, in another example, the first device sends the second time information to the second device, where the second time information is used to determine the third time difference.

Correspondingly, that the second device determines the distance between the first device and the second device based on the first time difference and the second time difference includes: The second device determines the distance between the first device and the second device based on the first time difference, the second time difference, the third time difference, and the fourth time difference.

In other words, in this implementation, the distance between the first device and the second device is determined based on a transmission time difference of more symbols between the first device and the second device, to improve accuracy of the obtained distance.

Optionally, when the first symbol and the second symbol are carried on the first radio frame, the third symbol is carried on the second radio frame, where the second radio frame is located after the first radio frame.

For example, when the first device is a master node and the second device is a slave node, the first symbol may be carried on a resource that is in the first radio frame and that is used to transmit a G link symbol and/or an SG symbol, the second symbol is carried on a resource that is in the first radio frame and that is used to transmit a T link symbol and/or an ST symbol, and the third symbol is carried on a resource that is in the second radio frame and that is used to transmit a G link symbol and/or an SG symbol.

Optionally, the first symbol is carried on the first radio frame, the second symbol and the third symbol are carried on the second radio frame, and the radio frame of the second symbol is located after the first radio frame.

For example, when the second device is a master node and the first device is a slave node, the first symbol may be carried on a resource that is in the first radio frame and that is used to transmit a T link symbol and/or an ST symbol, the second symbol is carried on a resource that is in the second radio frame and that is used to transmit a G link symbol and/or an SG symbol, and the third symbol is carried on a resource that is in the second radio frame and that is used to transmit a T link symbol and/or an ST symbol.

In some possible implementations, the method further includes: The first device receives a third symbol; and the first device determines a third time difference, where the third time difference is a time interval between a fifth moment at which the first device receives the third symbol and the first moment at which the first device sends the first symbol.

In this implementation, in an example, the first device receives the second time information from the second device, where the second time information is used to determine a fourth time difference, and the fourth time difference is a time interval between a sixth moment at which the second device sends the third symbol and the third moment at which the second device receives the first symbol.

Correspondingly, that the first device determines the distance between the first device and the second device based on the first time difference and the second time difference includes: The first device determines the distance between the first device and the second device based on the first time difference, the second time difference, the third time difference, and the fourth time difference.

In this implementation, in another example, the first device sends the second time information to the second device, where the second time information is used to determine the third time difference.

Correspondingly, that the second device determines the distance between the first device and the second device based on the first time difference and the second time difference includes: The second device determines the distance between the first device and the second device based on the first time difference, the second time difference, the third time difference, and the fourth time difference.

In other words, in this implementation, the distance between the first device and the second device is determined based on a transmission time difference of more symbols between the first device and the second device, to improve accuracy of the obtained distance.

Optionally, when the first symbol and the second symbol are carried on the first radio frame, the third symbol is carried on the second radio frame, where the second radio frame is located before the first radio frame.

For example, when the first device is a master node and the second device is a slave node, the first symbol may be carried on a resource that is in the first radio frame and that is used to transmit a G link symbol and/or an SG symbol, the second symbol is carried on a resource that is in the first radio frame and that is used to transmit a T link symbol and/or an ST symbol, and the third symbol is carried on a resource that is in the second radio frame and that is used to transmit a T link symbol and/or an ST symbol.

Optionally, the first symbol is carried on the first radio frame, the second symbol and the third symbol are carried on the second radio frame, and the radio frame of the second symbol is located before the first radio frame.

For example, when the second device is a master node and the first device is a slave node, the first symbol may be carried on a resource that is in the first radio frame and that is used to transmit a G link symbol and/or an SG symbol, the second symbol is carried on a resource that is in the second radio frame and that is used to transmit a T link symbol and/or an ST symbol, and the third symbol is carried on a resource that is in the second radio frame and that is used to transmit a G link symbol and/or an SG symbol.

In some possible implementations, a resource in a same radio frame may carry ranging symbols sent by a same device to a plurality of other devices, so as to measure a distance between the same device and each of the plurality of other devices.

In other words, the radio frame further includes a ranging symbol used to measure a distance between the first device and a third device, or includes a ranging symbol used to measure a distance between the second device and the third device.

For example, when the first symbol is carried on the first resource that is in the radio frame and that is used to transmit the T link symbol, the third resource that is in the radio frame, that is used to transmit the T link symbol, and that carries the first symbol may carry a fourth symbol sent by the fourth device to the second device, where the fourth symbol is used to determine a distance between the fourth device and the second device.

For another example, when the second symbol is carried on the second resource that is in the radio frame and that is used to transmit the T link symbol, a fourth resource that is in the radio frame, that is used to transmit the G link symbol, and that carries the second symbol carries a fourth symbol sent by the fourth device to the first device, where the fourth symbol is used to determine a distance between the fourth device and the first device.

According to a second aspect, this application provides a measurement apparatus. The apparatus may include modules configured to implement the method in any implementation of the first aspect. Each module may be implemented by using software and/or hardware.

In some possible implementations, the apparatus may include a sending module, a receiving module, and a processing module. The sending module may be configured to implement the steps related to a sending operation in the first aspect, the receiving module may be configured to implement the steps related to a receiving operation in the first aspect, and the processing module may be configured to implement the steps related to operations such as obtaining and determining in the first aspect.

In some possible implementations, the apparatus may include a processor and a memory. The memory is configured to store computer-executable program code, where the program code includes instructions; and when the processor executes the instructions, the instructions enable the apparatus to perform the method in the first aspect.

In this implementation, the apparatus may be a device, or may be a chip used in a device.

According to a third aspect, this application provides a computer program product including instructions. When the computer program product is run on a computer, the computer is enabled to perform the method in the first aspect.

According to a fourth aspect, this application provides a computer-readable storage medium. The computer-readable storage medium stores instructions, and when the instructions are run on an electronic device or a computer, the electronic device or the computer is enabled to perform the method in the first aspect.

According to a fifth aspect, this application provides a communication system. The communication system includes the communication apparatus in the second aspect.

For beneficial effects of the possible implementations of the second aspect to the fifth aspect, refer to the beneficial effects brought by the first aspect. Details are not described herein again.

## BRIEF DESCRIPTION OF DRAWINGS

FIG. 1 is a diagram of a structure of a communication system according to an embodiment of this application;
FIG. 2 is a diagram of an architecture of a vehicle ranging system according to an embodiment of this application;
FIG. 3 is an example flowchart of a measurement method according to an embodiment of this application;
FIG. 4 is a diagram of structures of radio frames and a super frame according to an embodiment of this application;
FIG. 5 is a diagram of transmission of a ranging symbol according to an embodiment of this application;
FIG. 6 is a diagram of transmission of a ranging symbol according to another embodiment of this application;
FIG. 7 is a diagram of transmission of a ranging symbol according to still another embodiment of this application;
FIG. 8 is a diagram of a relationship between transmission moments of ranging symbols according to an embodiment of this application;

FIG. 9 is a diagram of a time relationship between receiving and sending a ranging symbol by an antenna connector according to an embodiment of this application;

FIG. 10 is a diagram of transmission of multi-user ranging symbols according to an embodiment of this application;

FIG. 11 is an example flowchart of a measurement method according to another embodiment of this application;

FIG. 12 is a diagram of transmission of a ranging symbol according to still another embodiment of this application;

FIG. 13 is a diagram of a relationship between transmission moments of ranging symbols according to another embodiment of this application;

FIG. 14 is an example flowchart of a measurement method according to another embodiment of this application;

FIG. 15 is a diagram of transmission of a ranging symbol according to still another embodiment of this application;

FIG. 16 is a diagram of a relationship between transmission moments of ranging symbols according to another embodiment of this application;

FIG. 17 is a diagram of a structure of a measurement apparatus according to an embodiment of this application; and

FIG. 18 is a diagram of a structure of a measurement apparatus according to another embodiment of this application.

## DESCRIPTION OF EMBODIMENTS

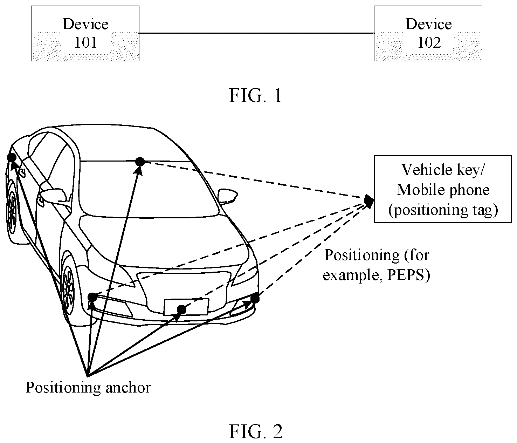

FIG. 1 is a diagram of a structure of a ranging system according to an embodiment of this application. The ranging system may include a device 101 and a device 102.

The device 101 and the device 102 may communicate with each other by using a communication link. In some communication scenarios, the device 101, the device 102, and the communication link between the device 101 and the device 102 may be collectively referred to as a communication domain.

It may be understood that FIG. 1 shows only one communication domain. However, a quantity of communication domains is not limited in the ranging system in this application, and the system in this application may include one or more communication domains.

In addition, although FIG. 1 shows only an example in which one communication domain includes two devices, a quantity of devices in the communication domain is not limited in this application.

Each communication domain may include one master node and at least one slave node. The master node may also be referred to as a management node, which is referred to as a G node (Grant Node) for short, manages and allocates a time-frequency resource of a communication domain to the slave node, and schedules a time-frequency resource for communication or measurement between nodes in the communication domain. The slave node may also be referred to as a terminal node, which is referred to as a T node (Terminal Node) for short.

In an example, the device 101 may be a management node in the SparkLink Basic (SparkLink Basic, SLB) standard/SparkLink Low Energy (SparkLink Low Energy, SLE) standard, and the device 102 may be a terminal node in the SLB/SLE. The device 101 is a G node, and the device 102 is a T node.

In another example, the device 101 may be a master device (master) in the Bluetooth low energy (Bluetooth Low Energy, BLE) standard, and the device 102 may be a slave device (slave) in the Bluetooth low energy (Bluetooth Low Energy, BLE) standard. The device 101 is a G node, and the device 102 is a T node.

In still another example, the device 101 may be an access point (AP) in the Wi-Fi standard, and the device 102 may be a station (STA) in the Wi-Fi standard. The device 101 is a G node, and the device 102 is a T node.

The system shown in FIG. 1 may be used in a plurality of scenarios, for example, may be used in an in-vehicle wireless positioning scenario, an indoor positioning scenario, an indoor navigation scenario, or an indoor ranging scenario, or may be used in another wide area wireless communication scenario or local area wireless communication scenario.

An example in which the system shown in FIG. 1 includes a plurality of slave nodes and is used in an in-vehicle positioning scenario is used below for description with reference to FIG. 2.

As shown in FIG. 2, in the in-vehicle positioning scenario, positioning anchors may be respectively deployed on four corners of a vehicle, and positioning anchors are deployed on a center console, rear view mirrors, and a ceiling (that is, a top inside the vehicle) of the vehicle, to position a vehicle key used as a to-be-positioned node. The vehicle key may include a vehicle key that has a positioning function in a conventional form, or may include a mobile phone, a wearable device, or the like that may be used to unlock a vehicle, or serve as a vehicle key. The positioning anchor may also be referred to as a positioning node, a positioning base station, or a positioning beacon (beacon), and may be referred to as an anchor (anchor) for short. The to-be-positioned node may be referred to as a positioning tag (tag) or a measured node, and may be referred to as a tag for short.

It may be understood that, that the positioning anchors are deployed on the corners of the vehicle, the central control console, the rear view mirrors, or the ceiling is merely an example. An in-vehicle wireless device such as a display screen, a microphone, a speaker, a camera, and a T-BOX inside the vehicle, or a camera of a 360 all-around application outside the vehicle may also be reused as a positioning anchor.

In the scenario shown in FIG. 2, any node may act as a node G. For example, the node G may be a vehicle key, and all anchors in the vehicle are T nodes. For another example, the node G is any anchor in the vehicle, and other anchors and the vehicle key are all T nodes.

In the scenario shown in FIG. 2, a distance between each of the plurality of anchors and the to-be-positioned node (that is, the vehicle key) may be measured, and the to-be-positioned node (the vehicle key) is positioned based on the measured distances.

For a method for positioning the to-be-positioned node based on the measured distances, refer to a distance-based positioning method in the existing communication field, for example, a trilateration method (Trilateration) or a multilateration method (Multilateration). Details are not described herein again. The following describes a method for measuring a distance/angle (for example, an angle of arrival) between an anchor and a to-be-positioned node. In the distance measurement method in this application, both the anchor and the to-be-positioned node are referred to as devices.

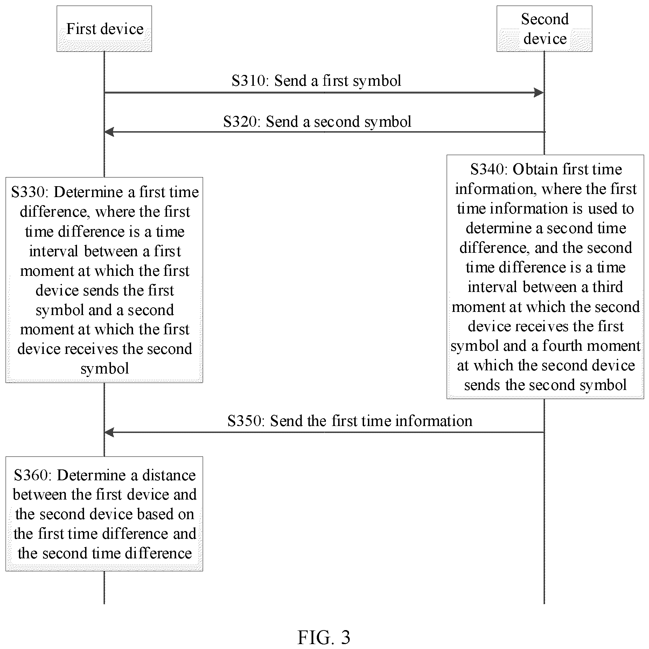

FIG. 3 is a schematic flowchart of a measurement method according to an embodiment of this application. It may be understood that FIG. 3 is merely an example, and the measurement method in this application may include more or similar steps.

A first device may be the device 101 in FIG. 1, and a second device may be the device 102 in FIG. 1; or the first device may be any anchor in FIG. 2, and the second device may be the positioned node in FIG. 2.

S310: The first device sends a first symbol. Correspondingly, the second device receives the first symbol.

In this embodiment, in an example, a radio frame that carries the first symbol is a radio frame in a SparkLink wireless communication technology.

A basic version of the SparkLink wireless communication standard (SLB) includes transmission frame structures of a super frame and a radio frame. A period of the super frame is 1 millisecond (ms), each super frame includes 48 radio frames, a length of each radio frame may be 20.833 microseconds, and one radio frame may include a downlink data symbol, an uplink data symbol, a system overhead symbol (a system overhead G symbol or a system overhead T symbol), and an uplink/downlink switching interval. The downlink data symbol may also be referred to as a G link symbol, which is referred to as a G symbol for short, and the G symbol is transmitted on a G link. The uplink data symbol may also be referred to as a T link symbol, which is referred to as a T symbol for short, and the T symbol is transmitted on a T link. The system overhead G symbol may also be referred to as an SG symbol, the system overhead T symbol may also be referred to as an ST symbol, and the uplink/downlink switching interval may also be referred to as a GAP.

In an example, the downlink data symbol and/or the uplink data symbol of the radio frame may be orthogonal frequency-division multiplexing (orthogonal frequency-division multiplexing, OFDM) symbols.

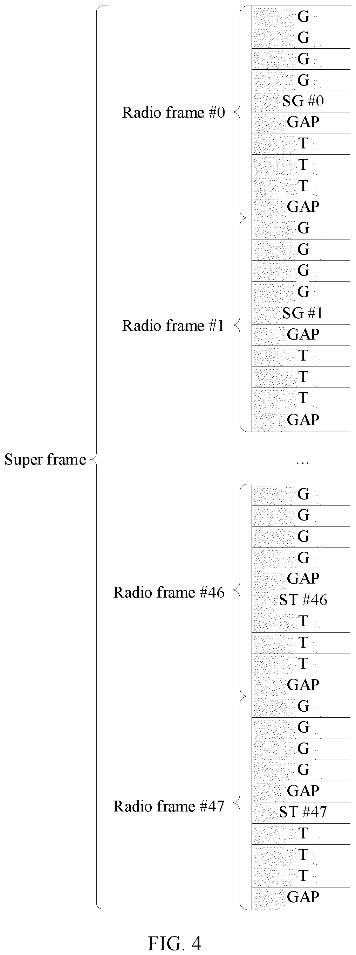

A diagram of structures of a super frame and radio frames is shown in FIG. 4. In the frame structures shown in FIG. 4, one super frame includes 48 radio frames, the radio frames are numbered from 0, and one radio frame includes four G symbol resources, one SG symbol resource or one ST symbol resource, three T symbol resources, and two GAPs. The G symbol resource is used for a device used as a management node to send a data symbol, and the data symbol may be referred to as a G symbol. The SG symbol resource is used for the device used as the management node to send a system overhead symbol, and the system overhead symbol is referred to as an SG symbol. The ST symbol resource is used for a device used as a slave node to send a system overhead symbol, and the system overhead symbol is referred to as an ST symbol. The T symbol resource is used for the device used as the slave node to send a data symbol, and the data symbol is referred to as a T symbol. The GAP is used for switching between sending and receiving of the device.

In FIG. 4, for example, a frame 0 and a frame 1 in the radio frames include SG symbol resources, and a frame 46 and a frame 47 in the radio frames include ST symbol resources.

It may be understood that the structure shown in FIG. 4 is merely an example. A quantity of radio frames included in one super frame, and quantities of G symbol resources, SG symbol resources, ST symbol resources, T symbol resources, and GAPs included in one radio frame may not be limited thereto.

In an example of this embodiment, the radio frame carrying the first symbol may be any radio frame in the super frame shown in FIG. 4.

In this embodiment, a symbol used to carry a ranging signal is referred to as a ranging symbol, and a resource carrying the ranging symbol is referred to as a ranging symbol resource. The ranging symbol may also be referred to as a measurement symbol, and is used for ranging and/or angle measurement. In this embodiment, a ranging symbol sent by the first device is referred to as a first ranging symbol, and may be referred to as the first symbol for short.

In the SparkLink wireless communication technology, an OFDM signal whose physical bandwidth is approximately 20 megahertz (MHz) is referred to as a carrier, and an operating bandwidth is one or more carriers. For example, an operating bandwidth after carrier aggregation is 20 MHz, 40 MHz, 80 MHz, 160 MHz, 200 MHz, or 320 MHz.

S320: The second device sends a second symbol, where the first symbol and the second symbol are carried on a same radio frame or carried on the different radio frames. Correspondingly, the first device receives the second symbol.

The radio frame carrying the second symbol may be a radio frame in the SparkLink wireless communication technology. In an example, the radio frame carrying the second symbol may be any radio frame in the super frame shown in FIG. 4.

In this embodiment, a ranging symbol sent by the second device is referred to as a second ranging symbol, and may be referred to as the second symbol for short.

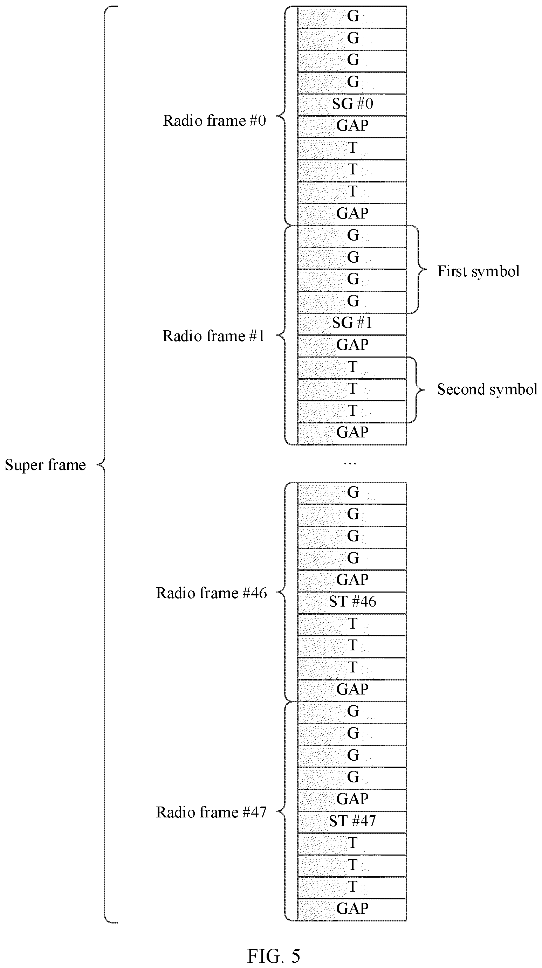

FIG. 5 is a diagram of transmission of a ranging symbol according to an embodiment of this application. In a radio frame shown in FIG. 5, the first symbol and the second symbol are carried on a same radio frame, that is, carried on a radio frame #1. The first symbol is carried on all or some resources that are in the radio frame #1 and that are used to transmit a G link symbol, and the second symbol is carried on all or some resources that are in the radio frame #1 and that are used to transmit a T link symbol.

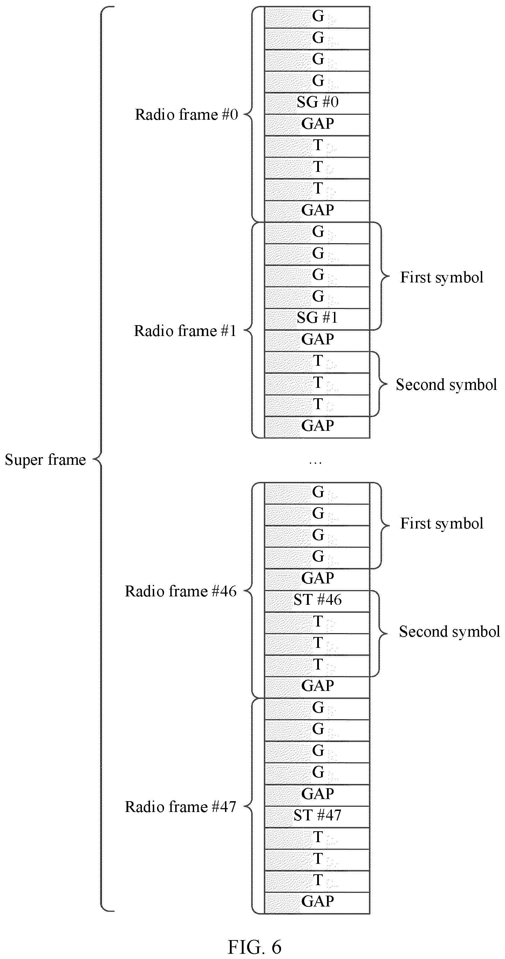

FIG. 6 is a diagram of transmission of a ranging symbol according to another embodiment of this application. In a radio frame shown in FIG. 6, the first symbol and the second symbol are carried on a same radio frame.

For example, the first symbol is carried on all or some resources that are in the radio frame #1 and that are used to transmit a G link symbol, and a resource used to transmit an SG symbol, and the second symbol is carried on all or some resources that are in the radio frame #1 and that are used to transmit a T link symbol.

For another example, the first symbol is carried on all or some resources that are in the radio frame #46 and that are used to transmit a G link symbol, and the second symbol is carried on all or some resources that are in the radio frame #46 and that are used to transmit a T link symbol, and a resource used to transmit an ST symbol.

In this embodiment of this application, when the first symbol and the second symbol are carried on a same radio frame, measurement may be completed in a single radio frame. In a fastest case, ranging/angle measurement may be completed once in duration ($20.83\ \mu s$) of one radio frame, and a measurement latency is extremely low. In this application, a frame structure that includes both a G symbol and a T symbol and that is of one radio frame is fully used, so that extremely low latency performance is provided, or more measurement results can be provided within a specific measurement time, thereby providing more sampling data for subsequent post-processing of positioning such as extended Kalman filtering.

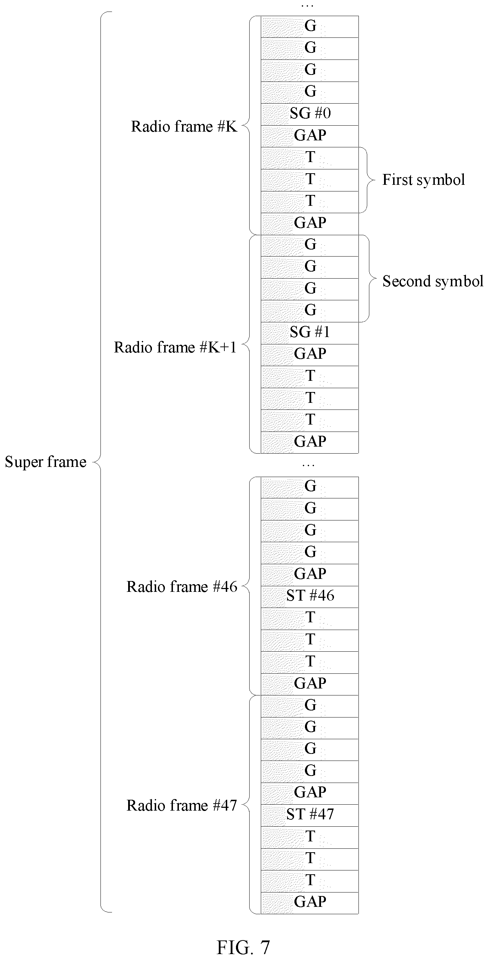

FIG. 7 is a diagram of transmission of a ranging symbol according to another embodiment of this application. In an example shown in FIG. 7, the first symbol is carried on a radio frame #K+1, the second symbol is carried on a radio frame #K, and K is an integer less than 48. The first symbol is carried on all or some resources that are in the radio frame #K+1 and that are used to transmit a G link symbol and/or an SG symbol, and the second symbol is carried on all or some resources that are in the radio frame #K and that are used to transmit a T link symbol. The radio frame #K and the radio frame #K+1 are examples, and the radio frames carrying the first symbol and the second symbol may be consecutive or inconsecutive.

FIG. 4 to FIG. 7 are frame structures of a super frame, and a horizontal coordinate in each of FIG. 4 to FIG. 7 is time.

When the first symbol and the second symbol are carried on a same radio frame, in some implementations, ranging may be performed based on a quantity of devices by using radio frames with different ratios of G symbol resources to T symbol resources (that is, different radio frame structures).

S330: The first device determines a first time difference, where the first time difference is a time interval between a first moment at which the first device sends the first symbol and a second moment at which the first device receives the second symbol, and the first time difference is used to determine a distance between the first device and the second device.

For example, the first device obtains a time point at which the first symbol is sent, and denotes the time as the first moment; and obtains a time point at which the second symbol is received, and denotes the time as the second moment; and calculates a difference between the first time t1 and the second time t2, to obtain the first time difference. The first time difference should be a positive number, that is, the first time difference is t2-t1, and the second time is after the first time.

S340: The second device obtains first time information, where the first time information is used to determine a second time difference, and the second time difference is a time interval between a third moment at which the second device receives the first symbol and a fourth moment at which the second device sends the second symbol.

In an example, the second device obtains a time point at which the first symbol is received, and denotes the time as the third moment; and obtains a time point at which the second symbol is sent, and denotes the time as the fourth moment.

In this embodiment, a sequence between S310 and S320 is not limited, and a sequence between S330 and S340 is not limited either.

S350: The second device sends the first time information to the first device. Correspondingly, the first device receives the first time information from the second device.

In an example, the second device calculates a difference between the third time t3 and the fourth time t4, to obtain the second time difference. After obtaining the second time difference, the second device sends the first time information to the first device, where the first time information includes the second time difference. The second time difference should also be a positive number, that is, the second time difference is t4-t3, where the fourth time is after the third time.

In another example, the second device sends the first time information to the first device, where the first time information includes indication information of the third moment and the fourth moment, so that the first device determines the third moment and the fourth moment based on the first time information and determines the second time difference based on the third moment and the fourth moment.

S360: The first device determines the distance between the first device and the second device based on the first time difference and the second time difference.

For example, the first device determines the second time difference based on the first time information, and determines the distance between the first device and the second device based on the first time difference and the second time difference.

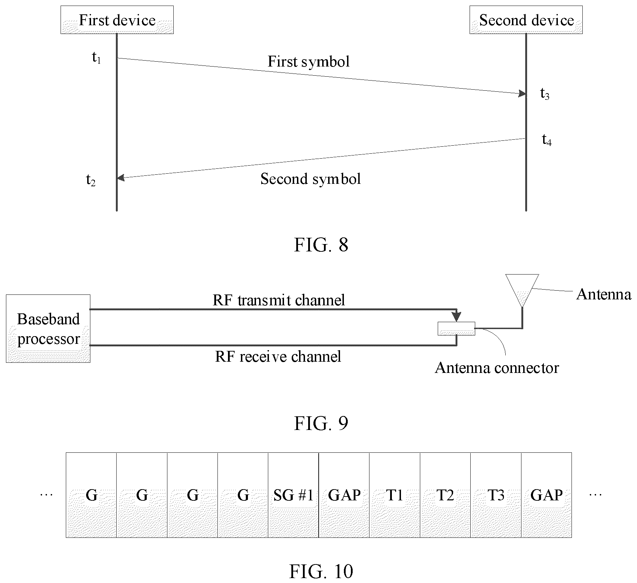

An example diagram of a time relationship between the first moment, the second moment, the third moment, and the fourth moment is shown in FIG. 8. It can be learned from FIG. 8 that, in an example, the first device may determine the distance between the first device and the second device based on the following relational expression:

$$D = \left| \frac{|t2-t1|-|t4-t3|}{2} \right| C,$$

where

$t1$ represents the first moment, $t2$ represents the second moment, $t3$ represents the third moment, $t4$ represents the fourth moment, $C$ represents a speed of light, and $D$ represents the distance between the first device and the second device.

When t2 > t1 and t4 > t3, the foregoing formula may be changed to $D = \frac{(t2-t1)-(t4-t3)}{2} C$.

In ranging exchange shown in FIG. 5 to FIG. 8, the first symbol and the second symbol respectively correspond to a first message and a second message, and therefore the ranging exchange may also be referred to as a mode of two way 2 messages.

In this embodiment of this application, in some implementations, the first moment is a time point at which the first symbol leaves an antenna connector of the first device, the second moment is a time point at which the second symbol arrives at the antenna connector of the first device, the third moment is a time point at which the first symbol arrives at an antenna connector of the second device, and the fourth moment is a time point at which the second symbol leaves the antenna connector of the second device. The time may be collectively referred to as an antenna connector (antenna connector) time.

In this implementation, if a sending time $t1'$ of the first symbol and a receiving time $t2'$ of the second symbol that are recorded by the first device are baseband times determined by the first device based on a baseband sending time, the first device may estimate the first time difference based on $t1'$, $t2'$, and $T_{cali,G}$. $T_{cali,G}$ represents a calibration time parameter of the first device, and may be a sum of delays introduced by a radio frequency (RF) transmit channel and an RF receive channel of the first device and a baseband processing delay when the first device receives the second symbol. In an example, $t_{round1} = t2 - t1 = t1' - t2' - T_{cali,G}$, where $t_{round1}$ represents the first time difference.

Similarly, if a receiving time $t3'$ of the first symbol and a sending time $t4'$ of the second symbol that are recorded by the second device are baseband times determined by the second device based on the baseband sending time, the second device may estimate the second time difference based on $t3'$, $t4'$, and $T_{cai,T}$. $T_{cali,T}$ represents a calibration time parameter of the second device, and may be a sum of delays introduced by a radio frequency (RF) transmit channel and an RF receive channel of the second device and a baseband processing delay when the second device receives the first symbol. In an example, $t_{reply1} = t4 - t3 = t4' - t3' - T_{cali,T}$, where $t_{reply1}$ represents the second time difference.

$T_{cali,G}$ may be determined by the first device by measuring the sum of delays of the RF transmit channel and the RF receive channel; and $T_{cali,T}$ may be determined by the second device by measuring the sum of delays of the RF transmit channel and the RF receive channel. An operation of measuring, by the device, the sum of delays of the RF transmit channel and the RF receive channel may also be referred to as loopback measurement.

Both $T_{cali,G}$ and $T_{cali,T}$ may be referred to as $T_{cali}$, and $T_{cali}$ may also be referred to as a delay calibration parameter. A diagram of a structure between a baseband processor, an RF transmit channel, an RF receive channel, and an antenna receiver is shown in FIG. 9. As shown in FIG. 9, the device may calculate $T_{cali}$ according to the following formula: $T_{cali} = T_{cali,TX} + T_{cali,RX}$, where $T_{cali,TX}$ represents a delay of the RF transmit channel, and $T_{cali,RX}$ represents a delay of the RF receive channel. In this embodiment of this application, a baseband processing delay of the device may also be included in $T_{cali}$.

In some implementations of this embodiment of this application, if a radio frame carries M first symbols, and the radio frame carries N second symbols, the first moment may be a time point at which the first device sends a starting point of an $S^{th}$ first symbol, the second moment may be a time point at which the first device receives a starting point of an $S^{th}$ second symbol, the third moment is a time point at which the second device receives the starting point of the $S^{th}$ first symbol, the fourth moment is a time point at which the second device sends the starting point of the $S^{th}$ second symbol, M and N are positive integers, and S is a positive integer and is less than or equal to a smaller value of M and N. In an example, S is 1.

For example, the first moment may be a time point at which the antenna connector of the first device sends a starting point of the 1st first symbol, the second moment is a time point at which the antenna connector of the first device receives a starting point of the 1st second symbol, the third moment is a time point at which the antenna connector of the second device receives the starting point of the 1st first symbol, and the fourth moment is a time point at which the antenna connector of the second device sends the starting point of the 1st second symbol.

If the first symbol includes a cyclic prefix CP, the first moment may be a moment at which a starting point of the CP of the 1st first symbol arrives at the antenna connector of the first device, and the third moment is a moment at which the starting point of the CP of the 1st first symbol arrives at the antenna connector of the second device.

If the second symbol includes a CP, the second moment may be a moment at which a starting point of the CP of the 1st second symbol arrives at the antenna connector of the first device, and the fourth moment is a moment at which the starting point of the CP of the 1st second symbol arrives at the antenna connector of the second device.

In some implementations of this embodiment of this application, optionally, a ranging symbol may be generated based on a ZC (Zadoff-Chu) sequence. Because a simple and reliable time-domain correlation detection algorithm can still be used in the ZC sequence in a multipath case, in this implementation, time-domain autocorrelation of a ranging symbol can be ensured in a multipath environment, thereby ensuring detection performance of a first path (line of sight).

In an example, a manner of generating the ZC sequence used to generate the ranging symbol is as follows:

$$d(n) = \begin{cases} exp\left(-j\frac{\pi un(n+1)}{41}\right), n = 0,1,\dots,18 \\ 0, n = 19 \\ exp\left(-j\frac{\pi un(n+1)}{41}\right), n = 20,21,\dots,38 \end{cases},$$

where

n represents a subcarrier sequence number, and u is a preset value.

u is any integer from a to b, a is an integer greater than or equal to 2, and b is an integer less than or equal to 39.

An example method for determining u is as follows: Within a specific time range, a positive integer is randomly selected as a value of u in a closed interval [a, b], so as to generate, according to the foregoing formula, the ZC sequence for RTT ranging exchange. In a ranging negotiation phase, a node G and a node T determine the value of u in advance by exchanging a message. Therefore, in an RTT ranging process, u is a preset value known to both the node G and the node T.

To enhance safety of RTT ranging exchange, the value of u may be adjusted based on a time period T, that is, a positive integer value is randomly re-selected as a new value of u within [a, b] at intervals of T, so that another device cannot continuously listen to the ZC sequence that has a random change. In addition, a random ZC sequence can be obtained by randomly selecting the value of u, and different ZC sequences can also avoid generating large measurement signal interference between the ZC sequence and a neighboring device.

Because the value of u is different from a value of u related to a symbol of a first training signal (first training signal, FTS) or a second training signal (second training signal, STS), a positioning reference signal different from the first training signal and the second training signal may be obtained, and a same waveform may be avoided from being used with the FTS and the STS.

The ranging symbol carrying the foregoing ZC sequence may be referred to as a positioning reference signal (Positioning Reference Signal, PRS). In addition to the PRS carrying the ZC sequence, an existing channel state information reference signal (CSI-RS) or sounding reference signal (SRS) in the SLB may also be used as the ranging symbol.

In some implementations of this embodiment of this application, a unit of each measurement time may be a picosecond (ps). For example, a unit of the first moment, the second moment, the third moment, and the fourth moment may be ps. Similarly, a unit of the first time difference and the second time difference may be ps.

In an example, the first device may send first configuration information to the second device. The first configuration information may include one or more of the following information: a quantity of times of measurement, an identifier of a first radio frame in each measurement, a time-frequency resource of the first symbol in each measurement, an identifier of a second radio frame in each measurement, and a time-frequency resource of the second symbol in each measurement. An example format of the first configuration information is shown in the following table.

| Field | Description |
|---|---|
| P | Quantity of times of measurement, where P is a positive integer. |
| Radio frame identifier 1-1 | An identifier or a number of a radio frame on which the first symbol is located |
|  | in the first measurement, where an example of the first symbol is a G link ranging symbol; |

(continued)

| Field | Description |
|---|---|
| Bitmap (bitmap) | Indicating a resource that is in the radio frame identifier 1-1 and that is used to carry the first symbol, where the bitmap may include $R_1$ bits, $R_1$ is a quantity of symbol resources in a radio frame indicated by the radio frame identifier 1-1, the $R_1$ bits are in a one-to-one correspondence with $R_1$ symbol resources in the radio frame, a symbol resource corresponding to a bit with a value of 1 carries the first symbol, and a symbol resource corresponding to a bit with a value of 0 does not carry the first symbol; |
| Radio frame identifier 1-2 | An identifier or a number of a radio frame on which the second symbol is located in the first measurement, where an example of the second symbol is a T link ranging symbol; |
| Bitmap | Indicating a symbol resource that is in a radio frame indicated by the radio frame identifier 1-2 and that carries the second symbol, where the bitmap may include $K_1$ bits, $K_1$ is a quantity of symbol resources in the radio frame indicated by the radio frame identifier 2, the $K_1$ bits are in a one-to-one correspondence with $K_1$ symbol resources in the radio frame, a symbol resource corresponding to a bit with a value of 1 carries the second symbol, and a symbol resource corresponding to a bit with a value of 0 does not carry the second symbol; |
| ... | ... |
| Radio frame identifier p-1 | An identifier or a number of a radio frame on which the first symbol is located in a $p^{th}$ measurement, where p is a positive integer less than or equal to P; |
| Bitmap | Indicating a resource that is in a radio frame indicated by the radio frame identifier p-1 and that carries the first symbol, where the bitmap may include $R_p$ bits, $R_p$ is a quantity of symbol resources in the radio frame indicated by the radio frame identifier p-1, the $R_p$ bits are in a one-to-one correspondence with $R_p$ symbol resources in the radio frame, a symbol resource corresponding to a bit with a value of 1 carries the first symbol, and a symbol resource corresponding to a bit with a value of 0 does not carry the first symbol; |
| Radio frame identifier p-2 | An identifier or a number of a radio frame on which the second symbol is located in the $p^{th}$ measurement; |
| Bitmap | Indicating a resource that is in a radio frame indicated by the radio frame identifier p-2 and that carries the second symbol, where the bitmap may include $K_p$ bits, $K_p$ is a quantity of symbol resources in the radio frame indicated by the radio frame identifier p-2, the $K_p$ bits are in a one-to-one correspondence with $K_p$ symbol resources in the radio frame, a symbol resource corresponding to a bit with a value of 1 carries the second symbol, and a symbol resource corresponding to a bit with a value of 0 does not carry the second symbol, |
| ... | ... |

FIG. 10 is a diagram of transmission of a ranging symbol according to still another embodiment of this application. In a radio frame shown in FIG. 10, different T symbol resources may be used to measure distances for different devices. To be specific, a T1 symbol resource, a T2 symbol resource, and a T3 symbol resource are respectively used by a device 1, a device 2, and a device 3 to send the second symbol.

It may be understood that, that the T symbol resources in FIG. 10 are used by the three devices to separately send respective T ranging symbols is merely an example. In this embodiment, a quantity 3 of devices does not constitute a limitation on a quantity of ranging devices associated with the T symbol resources. For example, T symbol resources in a same radio frame may be used by W devices to send respective T ranging symbols, provided that W is a positive integer greater than 1.

In other words, T symbol resources in one radio frame may not only be used to measure a distance between one G node and one T node, but also be used to measure a distance between each of a plurality of T nodes and the G node, that is, used for multi-user distance measurement or multi-device distance measurement.

In multi-user distance measurement, the first device used as the G node may group the plurality of T nodes into one group of nodes, and send group configuration information to the group of T nodes. The group configuration information may include a time-frequency resource used by the G node to send a G ranging symbol (for example, the first symbol) and a T symbol resource used by each T node in the group of nodes to send a T ranging symbol (for example, the second symbol). After receiving the group configuration information, each T node may obtain a related time difference based on a resource indicated by the group configuration information, to measure a distance between the T node and the G node.

In this embodiment of this application, time information used to determine a time difference is collectively referred to as time feedback information. For example, the first time information is the time feedback information.

In this embodiment of this application, when the time feedback information sent by a device directly includes a time difference, in some implementations, the second device may send the time difference in a format shown in the following table.

| Field | Description |
|---|---|
| Q | A quantity of time differences that are fed back; |
| Time difference 1 | Indicating the 1st time difference in Q time differences fed back by the device; |
| ... | ... |
| Time difference p | Indicating a $q^{th}$ time difference in the Q time differences fed back by the device, where q is a positive integer less than or equal to Q; |
| ... | ... |

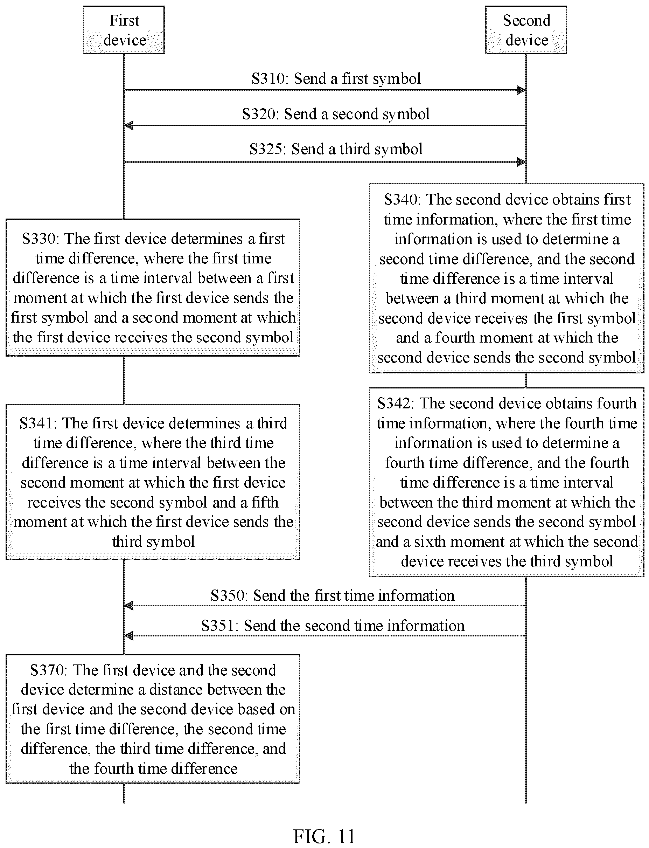

FIG. 11 is a schematic flowchart of a ranging method according to another embodiment of this application. The method may include S310, S320, S330, S340, S325, S350, S341, S342, S351, and S370. It may be understood that the execution sequence in the implementation shown in FIG. 11 is merely an example. This is not limited in this embodiment of this application.

S325: The first device sends a third symbol.

In this embodiment, the third symbol may also be referred to as a ranging symbol.

In some implementations of this embodiment, the first symbol and the second symbol are carried on the first radio frame, the third symbol is carried on the second radio frame, and the second radio frame is located after the first radio frame.

S341: The first device determines a third time difference, where the third time difference is a time interval between the second moment at which the first device receives the second symbol and a fifth moment at which the first device sends the third symbol.

In an example, the first moment is before the fourth moment, and the fourth moment is before the fifth moment.

S342: The second device obtains second time information, where the second time information is used to determine a fourth time difference, and the fourth time difference is a time interval between the third moment at which the second device sends the second symbol and a sixth moment at which the second device receives the third symbol.

S351: The second device sends the second time information. Correspondingly, the first device receives the second time information.

S370: The first device and the second device determine the distance between the first device and the second device based on the first time difference, the second time difference, the third time difference, and the fourth time difference.

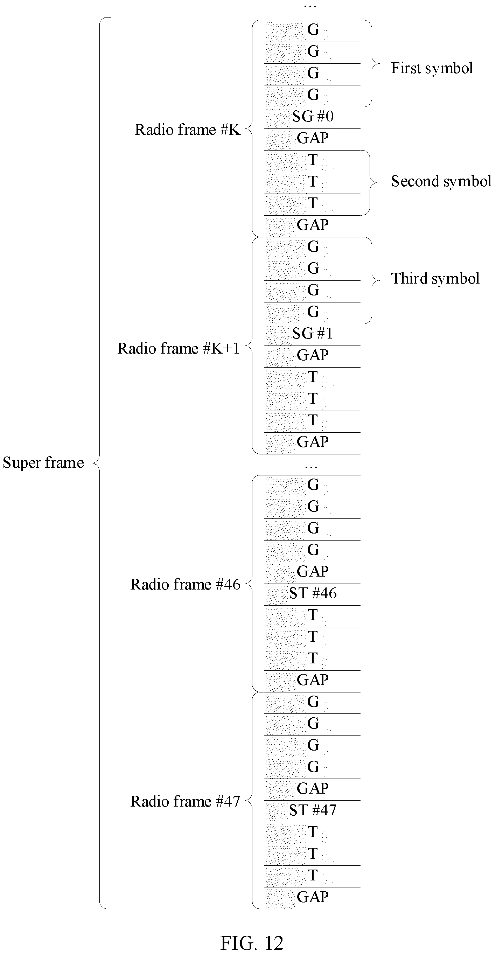

FIG. 12 is a diagram of transmission of a ranging symbol according to an embodiment of this application. As shown in FIG. 12, G symbol resources and T symbol resources in the radio frame #K and G symbol resources in the radio frame #K+1 carry ranging symbols.

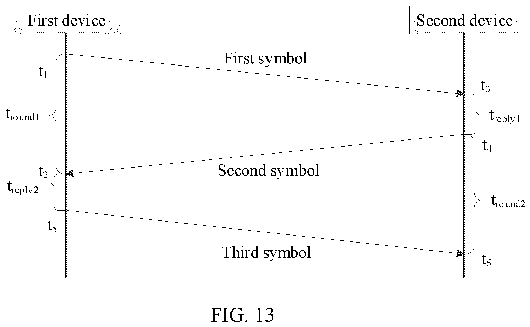

In an example, the G symbol resources in the radio frame #K carry the first symbol, the T symbol resources in the radio frame #K carry the second symbol, and the G symbol resources in the radio frame #K+1 carry the third symbol. A diagram of interactive transmission of the first symbol, the second symbol, and the third symbol in this example is shown in FIG. 13.

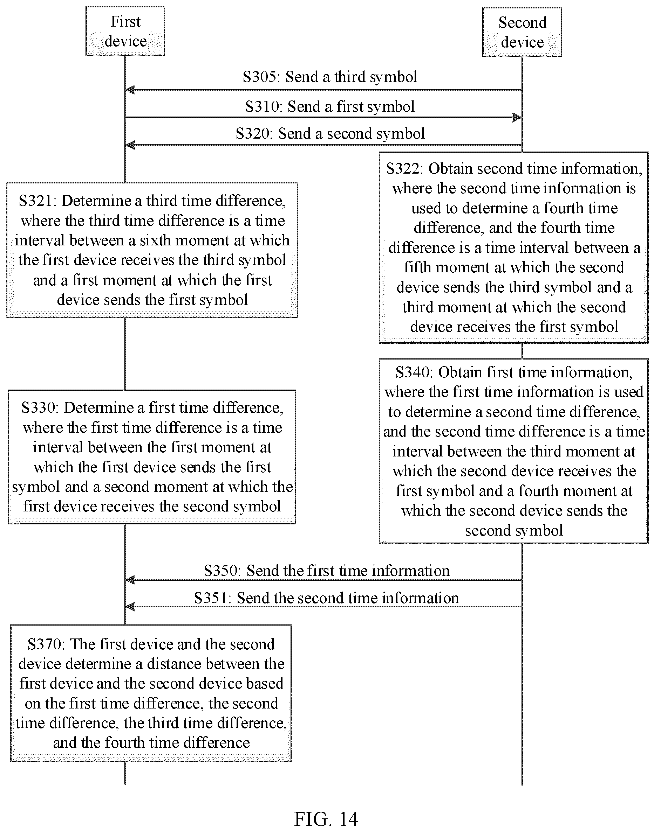

FIG. 14 is a schematic flowchart of a ranging method according to another embodiment of this application. The method may include S305, S310, S320, S321, S322, S330, S340, S350, S351, and S370. It may be understood that the execution sequence in the implementation shown in FIG. 14 is merely an example. This is not limited in this embodiment of this application.

S305: The second device sends a third symbol.

In this embodiment, the third symbol may also be referred to as a ranging symbol.

S321: The first device determines a third time difference, where the third time difference is a time interval between a sixth moment at which the first device receives the third symbol and the first moment at which the first device sends the first symbol.

S322: The second device obtains second time information, where the second time information is used to determine a fourth time difference, and the fourth time difference is a time interval between a fifth moment at which the second device sends the third symbol and a third moment at which the second device receives the first symbol.

In an example, the first moment is before the fourth moment, and the fifth moment is before the first moment.

In some implementations of this embodiment, the first symbol and the second symbol are carried on the first radio frame, the third symbol is carried on the second radio frame, and the second radio frame is located before the first radio frame.

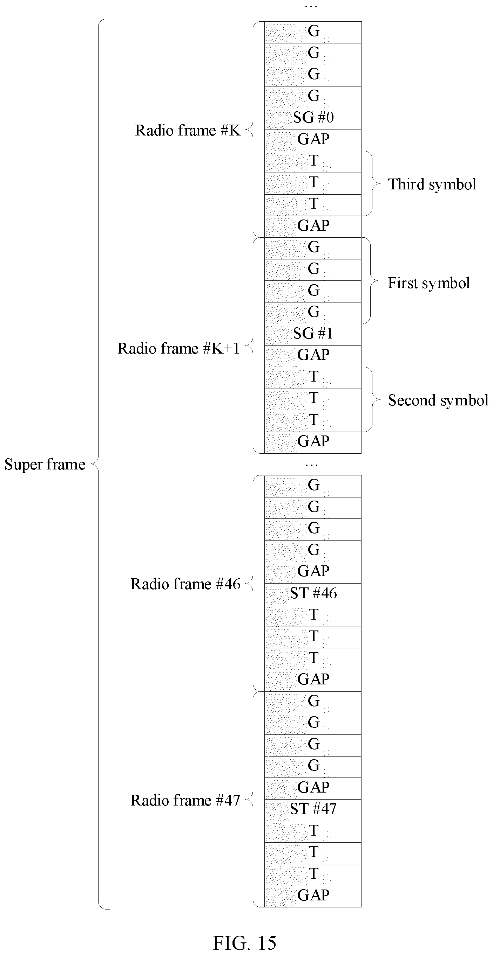

FIG. 15 is a diagram of transmission of a ranging symbol according to an embodiment of this application. As shown in FIG. 15, T symbol resources in the radio frame #K and G symbol resources and T symbol resources in the radio frame #K+1 carry ranging symbols.

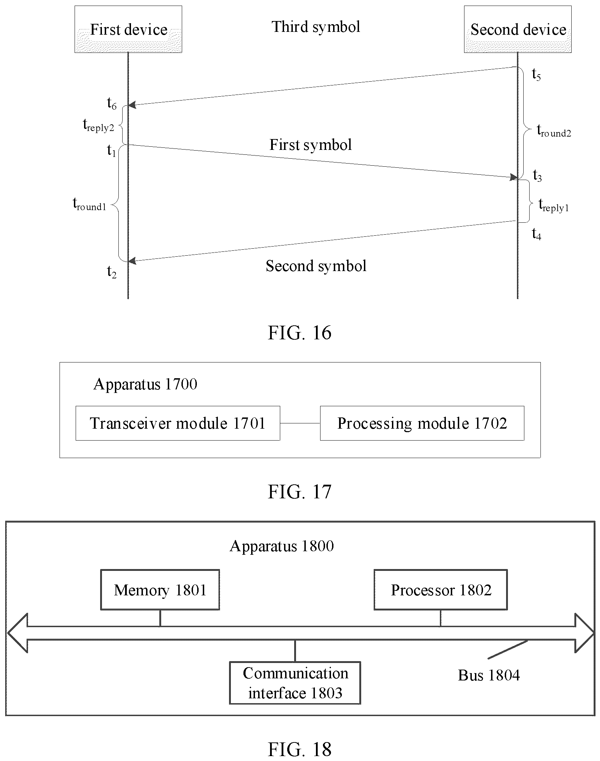

In an example, the T symbol resources in the radio frame #K carry the third symbol, the G symbol resources in the radio frame #K+1 carry the first symbol, and the T symbol resources in the radio frame #K+1 carry the second symbol. A diagram of interactive transmission of the first symbol, the second symbol, and the third symbol in this example is shown in FIG. 16, and the interactive transmission constitutes measurement exchange of two way ranging 3 messages (Two way ranging 3 Messages).

In the method shown in FIG. 11 or FIG. 14, when the first device or the second device determines the distance between the first device and the second device based on the first time difference, the second time difference, the third time difference, and the fourth time difference, in an example, the first device may determine the distance between the first

$$D = \frac{t_{\text{round1}} \times t_{\text{round2}} - t_{\text{reply1}} \times t_{\text{reply2}}}{t_{\text{round1}} + t_{\text{round2}} + t_{\text{reply1}} + t_{\text{reply2}}} C$$

device and the second device based on a relational expression where D represents the distance, $t_{round1}$ represents the first time difference, $t_{reply1}$ represents the second time difference, $t_{reply2}$ represents the third time difference, $t_{round2}$ represents the fourth time difference, and C represents the speed of light.

In the method shown in FIG. 11 or FIG. 14, because the devices of the two ranging parties separately send the first symbol, the second symbol, and the third symbol (corresponding to the first message, the second message, and a third message respectively), the mode may be referred to as the mode of two way ranging 3 messages. A time of flight measurement error of the two way 3 messages may be deduced as $error = T_f \times \left(1 - \frac{k_G + k_T}{2}\right)$, where $T_f$ represents a one-way time of flight of a signal, and $k_G$ and $k_T$ respectively represent multiples of timing frequencies of a clock (clock) of a node G and a clock of a node T relative to an ideal real clock. For example, $k_G$=1.00002 represents that a frequency offset of the clock of the node G relative to the ideal clock is 20 ppm. Compared with the mode of two way 2 messages, the mode of two way 3 messages can greatly eliminate a measurement error caused by a non-ideal factor such as a clock drift, thereby improving ranging accuracy.

In the method shown in FIG. 11 or FIG. 14, the first device may send configuration information to the second device. In an example, the configuration information may include one or more of the following information: the quantity of times of measurement, the identifier of the first radio frame in each measurement, the time-frequency resource of the first symbol in each measurement, the identifier of the second radio frame in each measurement, the time-frequency resource of the second symbol in each measurement, an identifier of a third radio frame in each measurement, and a time-frequency resource of the third symbol in each measurement. An example format of the resource configuration information is shown in the following table. where $T_f$ represents

| Field | Description |
|---|---|
| P | Quantity of times of measurement, where P is a positive integer. |
| Radio frame identifier 1-1 | An identifier or a number of a radio frame on which the first symbol is located in the first measurement, where an example of the first symbol is a G link ranging symbol; |
| Bitmap (bitmap) | identifier 1-1, the $R_1$ bits are in a one-to-one correspondence with $R_1$ symbol resources in the radio frame, a symbol resource corresponding to a bit with a value of 1 carries the first symbol, and a symbol resource corresponding to a bit with a value of 0 does not carry the first symbol; |
| Radio frame identifier 1-2 | An identifier or a number of a radio frame on which the second symbol is located in the first measurement, where an example of the second symbol is a T link ranging symbol; |

(continued)

| Field | Description |
|---|---|
| Bitmap | Indicating a symbol resource that is in a radio frame indicated by the radio frame identifier 1-2 and that carries the second symbol, where the bitmap may include $K_1$ bits, $K_1$ is a quantity of symbol resources in the radio frame indicated by the radio frame identifier 1-2, the $K_1$ bits are in a one-to-one correspondence with $K_1$ symbol resources in the radio frame, a symbol resource corresponding to a bit with a value of 1 carries the second symbol, and a symbol resource corresponding to a bit with a value of 0 does not carry the second symbol; |
| Radio frame identifier 1-3 | An identifier or a number of a radio frame on which the third symbol is located in the first measurement, where an example of the third symbol is a G link ranging symbol; |
| Bitmap | Indicating a symbol resource that is in a radio frame indicated by the radio frame identifier 1-3 and that carries the third symbol, where the bitmap may include $L_1$ bits, $L_1$ is a quantity of symbol resources in the radio frame indicated by the radio frame identifier 1-3, the $L_1$ bits are in a one-to-one correspondence with $L_1$ symbol resources in the radio frame, a symbol resource corresponding to a bit with a value of 1 carries the third symbol, and a symbol resource corresponding to a bit with a value of 0 does not carry the third symbol; |
| ... | ... |
| Radio frame identifier p-1 | An identifier or a number of a radio frame on which the first symbol is located in a $p^{th}$ measurement, where p is a positive integer less than or equal to P; |
| Bitmap | Indicating a resource that is in a radio frame indicated by the radio frame identifier p-1 and that carries the first symbol, where the bitmap may include $R_p$ bits, $R_p$ is a quantity of symbol resources in the radio frame indicated by the radio frame identifier p-1, the $R_p$ bits are in a one-to-one correspondence with $R_p$ symbol resources in the radio frame, a symbol resource corresponding to a bit with a value of 1 carries the first symbol, and a symbol resource corresponding to a bit with a value of 0 does not carry the first symbol; |
| Radio frame identifier p-2 | An identifier or a number of a radio frame on which the second symbol is located in the $p^{th}$ measurement; |
| Bitmap | Indicating a resource that is in a radio frame indicated by the radio frame identifier p-2 and that carries the second symbol, where the bitmap may include $K_p$ bits, $K_p$ is a quantity of symbol resources in the radio frame indicated by the radio frame identifier p-2, the $K_p$ bits are in a one-to-one correspondence with $K_p$ symbol resources in the radio frame, a symbol resource corresponding to a bit with a value of 1 carries the second symbol, and a symbol resource corresponding to a bit with a value of 0 does not carry the second symbol; |
| Radio frame identifier p-3 | An identifier or a number of a radio frame on which the third symbol is located in the $p^{th}$ measurement; |
| Bitmap (bitmap) | Indicating a resource that is in a radio frame indicated by the radio frame identifier p-3 and that carries the third symbol, where the bitmap may include $L_1$ bits, $L_1$ is a quantity of symbols in the radio frame indicated by the radio frame identifier p-3, the $L_1$ bits are in a one-to-one correspondence with $L_1$ symbols in the radio frame, a symbol resource corresponding to a bit with a value of 1 carries the third symbol, and a symbol resource corresponding to a bit with a value of 0 does not carry the third symbol; |
| ... | ... |

In the method shown in FIG. 11 or FIG. 14, for an implementation in which the second device sends each piece of time information, refer to a transmission manner in which the time information is fed back in the foregoing content.

For resource scheduling of two way 2 messages and two way 3 messages based on dynamic scheduling data control information of SLB, some examples of scheduling signaling may be as follows for different cases of a plurality of antennas and a single antenna:

1. For a ranging mode of two way 2 messages with a plurality of antenna ports, the node G performs resource indication by reusing a total of 69 bits of dynamic scheduling data control information. An example definition of information about the bits is as follows:

1 bit: cross-super frame scheduling indication. A value 0 indicates that control information and a resource scheduled based on the control information are located on a same super frame, and a value 1 indicates that the resource scheduled based on the control information is located on a super frame after a super frame on which the control information is located.

2 bits: extended resource configuration indication. A value 00 indicates that indication information of subsequent fields is used.

2 bits: reserved bits.

1 bit: receiving and sending indication information of a ranging signal of a G link resource. A value 0 indicates to send a signal, and a value 1 indicates to receive a signal.

3 bits: indication information of a start radio frame of a G link resource. In a scheduled super frame, a frame number of the start radio frame is #(a 3-bit value×6).

4 bits: a quantity $N_{G,ss,rang}$ of antenna ports of the G link resource, where a value 0 indicates not to perform resource configuration.

3 bits: a quantity $N_{G,ss,rang,rep}$ of times of repetition of antenna port ranging of the G link resource. If the field value is v, $N_{G,ss,rang,rep}=2^{\wedge}v$, where "^" represents power operation.

5 bits: a quantity of beams of beam enhanced ranging of the G link resource. If the field value is v, the quantity of beams is 2v, and a value 0 indicates not to perform resource configuration.

3 bits: a quantity $N_{G,bf,rang,rep}$ of times of repetition of beam enhanced ranging of the G link resource. If the field value is v, $N_{G,bf,rgng,rep}=2^{\wedge}v$, where "^" represents power operation.

1 bit: interval switching indication information of beam enhanced ranging of the G link resource. A value 0 indicates that an interval symbol does not need to be switched, and a value 1 indicates that the interval symbol needs to be switched.

2 bits: ranging type indication information of a T link resource. A value 00 indicates antenna port ranging, a value 01 indicates beamforming enhanced ranging, a value 11 indicates antenna port ranging and beamforming enhanced ranging, and a value 11 indicates not to configure resources.

1 bit: receiving and sending indication information of a ranging signal of the T link resource. A value 0 indicates to send a signal, and a value 1 indicates to receive a signal.

3 bits: indication information of a start radio frame of the T link resource. In a scheduled super frame, a frame number of the start radio frame is #(a 3-bit value×6).

4 bits: a quantity $N_{T,ss,rang}$ of antenna ports of the T link resource, where a value 0 indicates not to perform resource configuration.

3 bits: a quantity $N_{T,ss,rang,rep}$ of times of repetition of antenna port ranging of the T link resource. If the field value is v, $N_{T,ss,rang,rep}=2^{\wedge}v$, where "^" represents power operation.

5 bits: a quantity of beams of beam enhanced ranging of the T link resource. If the field value is v, the quantity of beams is 2v, and a value 0 indicates not to perform resource configuration.

3 bits: a quantity $N_{T,bf,rang,rep}$ of times of repetition of beam enhanced ranging of the T link resource. If the field value is v, $N_{T,bf,rang,rep}=2^{\wedge}v$, where "^" represents power operation.

1 bit: interval switching indication information of beam enhanced ranging of the T link resource. A value 0 indicates that an interval symbol does not need to be switched, and a value 1 indicates that the interval symbol needs to be switched.

24 bits: According to a processing method in section 6.10.1 of this standard, a polynomial g_CRC24B(D) is generated by using cyclic redundancy check, to calculate a cyclic redundancy check sequence, and a 24-bit multi-antenna ranging control information identifier mask is added. The 24-bit multi-antenna ranging control information identifier mask is configured by a high layer.

2. For a ranging mode of two way 3 messages (Two way 3 messages) with a single antenna port, the node G performs resource indication by reusing a total of 69 bits of dynamic scheduling data control information. The antenna port is defined based on the following features: a transmission channel of one symbol on an antenna port may be deduced from a transmission channel of another symbol on a same antenna port; an antenna port for transmitting broadcast information and G link control information is the same as an antenna port for transmitting a synchronization signal; and antenna ports for transmitting the synchronization signal at different moments are the same. Information about bits in the 69-bit dynamic scheduling data control information of two way 3 messages with the single antenna port is defined as follows:

1 bit: cross-super frame scheduling indication. A value 0 indicates that control information and a resource scheduled based on the control information are located on a same super frame, and value 1 indicates that the resource scheduled based on the control information is located on a super frame after a super frame on which the control information is located.

2 bits: extended resource configuration indication. A value 01 indicates that indication information of subsequent fields is used.

2 bits: reserved bits.

1 bit: receiving and sending indication of three message resources, where a value 0 indicates sending-receiving-sending, and a value 1 indicates receiving-sending-receiving.

1 bit: indication information of a G/T link of a first message resource, where a value 0 indicates a G link resource, and a value 1 indicates a T link resource.

3 bits: indication information of a start radio frame of the first message (that is, a first ranging symbol) resource. In a scheduled super frame, a frame number of the start radio frame is #(a 3-bit value×6).

5 bits: a quantity of single-port beams of the first message resource. If the field value is v, the quantity of beams is 2v, and a value 0 indicates not to perform resource configuration.

3 bits: a quantity $N_{G,bf,rang,rep}$ of times of repetition of single-port beams of the first message resource. If the field value is v, $N_{G,bf,rang,rep}=2^\wedge v$, where "^" represents power operation.

1 bit: interval switching indication information of the first message. A value 0 indicates that an interval symbol does not need to be switched, and a value 1 indicates that the interval symbol needs to be switched.

1 bit: indication information of a G/T link of a second message (that is, a second ranging symbol) resource, where a value 0 indicates a G link resource, and a value 1 indicates a T link resource.

3 bits: indication information of a start radio frame of the second message resource. In a scheduled super frame, a frame number of the start radio frame is #(a 3-bit value×6).

5 bits: a quantity of single-port beams of the second message resource. If the field value is v, the quantity of beams is 2v, and a value 0 indicates not to perform resource configuration.

3 bits: a quantity $N_{G,bf,rang,rep}$ of times of repetition of single-port beams of the second message resource. If the field value is v, $N_{G,bf,rang,rep}=2^\wedge v$, where "^" represents power operation.

1 bit: interval switching indication information of the second message. A value 0 indicates that an interval symbol does not need to be switched, and a value 1 indicates that the interval symbol needs to be switched.

1 bit: indication information of a G/T link of a third message (that is, a third ranging symbol) resource, where a value 0 indicates a G link resource, and a value 1 indicates a T link resource.

3 bits: indication information of a start radio frame of the third message resource. In a scheduled super frame, a frame number of the start radio frame is #(a 3-bit value×6).

5 bits: a quantity of single-port beams of the third message resource. If the field value is v, the quantity of beams is 2v, and a value 0 indicates not to perform resource configuration.

3 bits: a quantity $N_{G,bf,rang,rep}$ of times of repetition of single-port beams of the third message resource. If the field value is v, $N_{G,bf,rang,rep}=2^\wedge v$, where "^" represents power operation.

1 bit: interval switching indication information of the third message. A value 0 indicates that an interval symbol does not need to be switched, and a value 1 indicates that the interval symbol needs to be switched.

24 bits: According to a processing method in section 6.10.1 of this standard, a polynomial g_CRC24B(D) is generated by using cyclic redundancy check, to calculate a cyclic redundancy check sequence, and a 24-bit multi-antenna ranging control information identifier mask is added. The 24-bit multi-antenna ranging control information identifier mask is configured by a high layer.

3. For a ranging mode of two way 3 messages (two way 3 messages) with a plurality of antenna ports, the node G performs resource indication by reusing a total of 69 bits of dynamic scheduling data control information. Information about the bits is defined as follows:

1 bit: cross-super frame scheduling indication. A value 0 indicates that control information and a resource scheduled based on the control information are located on a same super frame, and a value 1 indicates that the resource scheduled based on the control information is located on a super frame after a super frame on which the control information is located.

2 bits: extended resource configuration indication. A value 10 indicates that indication information of subsequent fields is used.

2 bits: reserved bits.

1 bit: receiving and sending indication of three message resources, where a value 0 indicates sending-receiving-sending, and a value 1 indicates receiving-sending-receiving.

1 bit: reserved bit.

1 bit: indication information of a G/T link of a first message resource, where a value 0 indicates a G link resource, and a value 1 indicates a T link resource.

3 bits: indication information of a start radio frame of the first message resource. In a scheduled super frame, a frame number of the start radio frame is #(a 3-bit value×6).

4 bits: a quantity $N_{G,ss,rang}$ of antenna ports of the first message resource, where a value 0 indicates not to perform resource configuration.

2 bits: a quantity $N_{G,ss,rang,rep}$ of times of repetition of antenna port ranging of the first message resource. If the field value is v, $N_{G,ss,rang,rep}=2^{\wedge}(v+1)$, where "^" represents power operation.

4 bits: a quantity of beams of beam enhanced ranging of the first message resource. If the field value is v, the quantity of beams is 4v, and a value 0 indicates not to perform resource configuration.

2 bits: a quantity $N_{G,bf,rang,rep}$ of times of repetition of beam enhanced ranging beams of the first message resource. If the field value is v, $N_{G,bf,rang,rep}=2^{\wedge}(v+1)$, where "^" represents power operation.

1 bit: interval switching indication information of the first message. A value 0 indicates that an interval symbol does not need to be switched, and a value 1 indicates that the interval symbol needs to be switched.

1 bit: indication information of a G/T link of a second message resource, where a value 0 indicates a G link resource, and a value 1 indicates a T link resource.

3 bits: indication information of a start radio frame of the second message resource. In a scheduled super frame, a frame number of the start radio frame is #(a 3-bit value×6).

4 bits: a quantity $N_{G,ss,rang}$ of antenna ports of the second message resource, where a value 0 indicates not to perform resource configuration.

2 bits: a quantity $N_{G,ss,rang,rep}$ of times of repetition of antenna port ranging of the second message resource. If the field value is v, $N_{G,ss,rang,rep}=2^{\wedge}(v+1)$, where "^" represents power operation.

4 bits: a quantity of beams of beam enhanced ranging of the second message resource. If the field value is v, the quantity of beams is 4v, and a value 0 indicates not to perform resource configuration.

2 bits: a quantity $N_{G,bf,rang,rep}$ of times of repetition of beam enhanced ranging of the second message resource. If the field value is v, $N_{G,bf,rang,rep}=2^{\wedge}(v+1)$, where "^" represents power operation.

1 bit: interval switching indication information of the second message. A value 0 indicates that an interval symbol does not need to be switched, and a value 1 indicates that the interval symbol needs to be switched.

1 bit: indication information of a G/T link of a third message resource, where a value 0 indicates a G link resource, and a value 1 indicates a T link resource.

3 bits: indication information of a start radio frame of the third message resource. In a scheduled super frame, a frame number of the start radio frame is #(a 3-bit value×6).

24 bits: According to a processing method in section 6.10.1 of this standard, a polynomial g_CRC24B(D) is generated by using cyclic redundancy check, to calculate a cyclic redundancy check sequence, and a 24-bit multi-antenna ranging control information identifier mask is added. The 24-bit multi-antenna ranging control information identifier mask is configured by a high layer.

FIG. 17 is a diagram of a structure of a measurement apparatus according to an embodiment of this application. As shown in FIG. 17, the apparatus 1700 includes a transceiver module 1701 and a processing module 1702.

In an example, the apparatus 1700 may be used in a first device. In this example, the apparatus 1700 may be configured to implement an operation implemented by the first device in any one of the foregoing methods. The transceiver module 1701 may be configured to implement a receiving operation and a sending operation, and the processing module 1702 may be configured to implement operations such as obtaining, determining, and configuration.

For example, the transceiver module 1701 may be configured to implement the operations implemented by the first device in S310, S320, and S350 in the embodiment shown in FIG. 3, and the processing module 1702 may be configured to implement S330 and S360 in the embodiment shown in FIG. 3.

For another example, the transceiver module 1701 may be configured to implement the operations implemented by the first device in S310, S320, S325, S350, and S351 in the embodiment shown in FIG. 11, and the processing module 1702 may be configured to implement S330, S341, and S370 in the embodiment shown in FIG. 11.

For another example, the transceiver module 1701 may be configured to implement the operations implemented by the first device in S310, S320, S305, S350, and S351 in the embodiment shown in FIG. 14, and the processing module 1702 may be configured to implement S330, S321, and S370 in the embodiment shown in FIG. 14.

In another example, the apparatus 1700 may be used in the second device. In this example, the apparatus 1700 may be configured to implement an operation implemented by the second device in any one of the foregoing methods. The transceiver module 1701 may be configured to implement a receiving operation and a sending operation, and the processing module 1702 may be configured to implement operations such as obtaining, determining, recording, and configuration.

For example, the transceiver module 1701 may be configured to implement the operations implemented by the second device in S310, S320, and S350 in the embodiment shown in FIG. 3, and the processing module 1702 may be configured to implement S340 in the embodiment shown in FIG. 3.

For another example, the transceiver module 1701 may be configured to implement the operations implemented by the second device in S310, S320, S325, S350, and S351 in the embodiment shown in FIG. 11, and the processing module 1702 may be configured to implement S340 and S342 in the embodiment shown in FIG. 11.

For another example, the transceiver module 1701 may be configured to implement the operations implemented by the second device in S310, S320, S305, S350, and S351 in the embodiment shown in FIG. 14, and the processing module 1702 may be configured to implement S322 and S340 in the embodiment shown in FIG. 14.

FIG. 20 is a diagram of a structure of a measurement apparatus according to another embodiment of this application. The apparatus 1800 shown in FIG. 20 may be configured to perform a method performed by the first device in any one of the foregoing methods, or configured to perform a method performed by the second device in any one of the foregoing methods.

As shown in FIG. 20, the apparatus 1800 in this embodiment includes a memory 1801, a processor 1802, a communication interface 1803, and a bus 1804. The memory 1801, the processor 1802, and the communication interface 1803 are communicatively connected to each other by using the bus 1804.

The memory 1801 may be a read-only memory (read-only memory, ROM), a static storage device, a dynamic storage device, or a random access memory (random access memory, RAM). The memory 1801 may store a program. When the program stored in the memory 1801 is executed by the processor 1802, the processor 1802 is configured to perform the steps performed by the first device in any one of the foregoing methods, or the processor 1802 is configured to perform the steps performed by the second device in any one of the foregoing methods.

The processor 1802 may be a general-purpose central processing unit (Central Processing Unit, CPU), a microprocessor, an application-specific integrated circuit (Application-Specific Integrated Circuit, ASIC), or one or more integrated circuits, and is configured to execute a related program.

The processor 1802 may alternatively be an integrated circuit chip and has a signal processing capability. In an implementation process, the related steps in embodiments of this application may be completed by using an integrated logic circuit of hardware in the processor 1802, or instructions in a form of software.

The processor 1802 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The methods, steps, and logic block diagrams disclosed in embodiments of this application may be implemented or executed. The general-purpose processor may be a microprocessor, or the processor may be any conventional processor or the like.

The steps of the methods disclosed with reference to embodiments of this application may be directly performed by a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1801. The processor 1802 reads information in the memory 1801, and completes, in combination with hardware of the processor 1802, functions that need to be performed by units included in the apparatus in this application.

The communication interface 1803 may use, but not limited to, a transceiver apparatus of a transceiver type, to implement communication between the apparatus 1800 and another device or a communication network.

The bus 1804 may include a path for transmitting information between various components (for example, the memory 1801, the processor 1802, and the communication interface 1803) of the apparatus 1800.

It should be understood that the apparatus 1800 shown in this embodiment of this application may be a communication device, or may be a chip configured in a communication device.

Some embodiments of this application further provide a computer program product, for example, a distance measurement application. When the computer program product is run on a processor, the method implemented by the first device or the second device in any one of the foregoing embodiments may be implemented. Some embodiments of this application further provide a computer-readable storage medium. The computer-readable storage medium includes computer instructions. When the computer instructions are run on a processor, the method implemented by the first device or the second device in any one of the foregoing embodiments may be implemented. In some embodiments of this application, a communication system is further provided. The communication system includes the first device and the second device in any one of the foregoing methods.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). In another example, when one of the foregoing modules is implemented in a form of scheduling program code by a processing element, the processing element may be a general-purpose processor, for example, a central processing unit (central processing unit, CPU) or another processor that can invoke the program code, such as a controller. For another example, the modules may be integrated together and implemented in a form of a system-on-a-chip (system-on-a-chip, SoC).

All or some of the foregoing embodiments may be implemented by using software, hardware, firmware, software modules or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, wireless, or microwaves) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

The term "a plurality of" in this specification means two or more. The term "and/or" in this specification describes only an association relationship between associated objects, and indicates that three relationships may exist. For example, A and/or B may represent three cases: Only A exists, both A and B exist, and only B exists. In addition, the character "/" in this specification usually indicates an "or" relationship between associated objects, and a character "/" in a formula usually indicates a "division" relationship between associated objects. In addition, it should be understood that, in the description of this application, terms such as "first" and "second" are used only for purposes of distinguishing descriptions, and cannot be understood as indicating or implying relative importance, or as indicating or implying a sequence.

It may be understood that various numeric numbers in embodiments of this application are merely distinguishing for ease of description, and are not intended to limit the scope of embodiments of this application.

It may be understood that, in embodiments of this application, sequence numbers of the foregoing processes do not mean execution sequences. The execution sequences of the processes should be determined based on functions and internal logics of the processes, and should not constitute any limitation on the implementation processes of embodiments of this application.

**Claims**

1. A measurement method, comprising:

   sending, by a first device, a first symbol;
   receiving, by the first device, a second symbol from a second device, wherein the first symbol and the second symbol are carried on a same radio frame or different radio frames; and
   determining, by the first device, a first time difference, wherein the first time difference is a time interval between a first moment at which the first device sends the first symbol and a second moment at which the first device receives the second symbol, and the first time difference is used to determine a distance between the first device and the second device.

2. The method according to claim 1, wherein the method further comprises:

   receiving, by the first device, first time information from the second device, wherein the first time information is used to determine a second time difference, and the second time difference is a time interval between a third moment at which the second device receives the first symbol and a fourth moment at which the second device sends the second symbol; and
   determining, by the first device, the distance between the first device and the second device based on the first time difference and the second time difference.

3. The method according to claim 1 or 2, wherein the first symbol and/or the second symbol are/is generated based on a ZC sequence, and the ZC sequence is generated in the following manner:

$$d(n) = \begin{cases} exp\left(-j\frac{\pi un(n+1)}{41}\right), n = 0,1, \dots ,18 \\ 0, n = 19 \\ exp\left(-j\frac{\pi un(n+1)}{41}\right), n = 20,21, \dots ,38 \end{cases},$$

wherein
n represents a subcarrier sequence number, u is a preset value, and d(n) represents a ZC sequence on an $n^{th}$ subcarrier.

4. The method according to claim 3, wherein u is any integer from a to b, a is a positive integer greater than 1, b is a positive integer less than 39, and a is less than b.

5. The method according to any one of claims 1 to 4, wherein the radio frame comprises a G link symbol, an SG symbol, and a T link symbol, or the radio frame comprises a G link symbol, a T link symbol, and an ST symbol; and the first symbol is a G link ranging symbol and the second symbol is a T link ranging symbol, or the first symbol is a T link ranging symbol and the second symbol is a G link ranging symbol, wherein the G link ranging symbol is carried on a resource used to transmit a G link symbol and/or a resource used to transmit an SG symbol, and the T link ranging symbol is carried on a resource used to transmit a T link symbol and/or a resource used to transmit an ST symbol.

6. The method according to any one of claims 1 to 5, wherein when the first symbol and the second symbol are carried on the same radio frame, a switching gap GAP exists between the first symbol and the second symbol.

7. The method according to any one of claims 1 to 5, wherein when the first symbol and the second symbol are carried on the different radio frames, the first symbol is carried on a first radio frame, and the second symbol is carried on a second radio frame, wherein

   when the first symbol is carried on the resource used to transmit the G link symbol and/or the resource used to transmit the SG symbol, and the second symbol is carried on the resource used to transmit the T link symbol and/or the resource used to transmit the ST symbol, the first radio frame further comprises a T link symbol, and the second radio frame further comprises a G link symbol; or
   when the first symbol is carried on the resource used to transmit the T link symbol and/or the resource used to transmit the ST symbol, and the second symbol is carried on the resource used to transmit the G link symbol and/or the resource used to transmit the SG symbol, the first radio frame further comprises a G link symbol, and the second radio frame further comprises a T link symbol.

8. The method according to any one of claims 1 to 7, wherein the method further comprises:

   receiving, by the first device, the first time information from the second device, wherein the first time information is used to determine the second time difference, and the second time difference is the time interval between the third moment at which the second device receives the first symbol and the fourth moment at which the second device sends the second symbol; and
   receiving, by the first device, first measurement information from the second device, wherein the first measurement information indicates a measurement exchange sequence number corresponding to the first time information.

9. The method according to any one of claims 1 to 8, wherein the first symbol is the 1st one of M ranging symbols sent by the first device in the radio frame, the second symbol is the 1st one of N ranging symbols received by the first device in the radio frame, N is a positive integer, and M is a positive integer.

10. The method according to any one of claims 1 to 9, wherein the first moment is a moment at which a starting point of the first symbol arrives at a first antenna connector of the first device, and the second moment is a moment at which a starting point of the second symbol arrives at the first antenna connector; or
    the first moment is a moment at which a starting point of a cyclic prefix CP of the first symbol arrives at the first antenna connector of the first device, and the second moment is a moment at which a starting point of a CP of the second symbol arrives at the first antenna connector.

11. The method according to any one of claims 1 to 10, wherein the method further comprises:

sending, by the first device, first configuration information to the second device, or receiving, by the first device, the first configuration information from the second device, wherein
the first configuration information indicates at least one of the following content: a Transaction ID corresponding to the measurement, an identifier of the radio frame, a first resource that is in the radio frame and that carries the first symbol, and a second resource that is in the radio frame and that is used to carry the second symbol.

12. The method according to claim 11, wherein the first configuration information indicates the first resource and/or the second resource by using a bitmap.

13. The method according to any one of claims 2 to 12, wherein the method further comprises:

sending, by the first device, a third symbol;
determining, by the first device, a third time difference, wherein the third time difference is a time interval between the second moment at which the first device receives the second symbol and a fifth moment at which the first device sends the third symbol; and
receiving, by the first device, second time information from the second device, wherein the second time information is used to determine a fourth time difference, and the fourth time difference is a time interval between the third moment at which the second device sends the second symbol and a sixth moment at which the second device receives the third symbol; and
the determining, by the first device, the distance between the first device and the second device based on the first time difference and the second time difference comprises:
determining, by the first device, the distance between the first device and the second device based on the first time difference, the second time difference, the third time difference, and the fourth time difference.

14. The method according to claim 13, wherein when the first symbol and the second symbol are carried on the first radio frame, the third symbol is carried on the second radio frame; or when the first symbol is carried on the first radio frame, the second symbol and the third symbol are carried on the second radio frame, wherein
the second radio frame is located after the first radio frame.

15. The method according to any one of claims 1 to 14, wherein the radio frame further comprises a ranging symbol used to measure a distance between the first device and a third device, or comprises a ranging symbol used to measure a distance between the second device and the third device.

16. A measurement apparatus, wherein the measurement apparatus is used in a first device, and the apparatus comprises:

a sending module, configured to send a first symbol;
a receiving module, configured to receive a second symbol from a second device, wherein the first symbol and the second symbol are carried on a same radio frame or different radio frames; and
a processing module, configured to determine a first time difference, wherein the first time difference is a time interval between a first moment at which the first device sends the first symbol and a second moment at which the first device receives the second symbol, and the first time difference is used to determine a distance between the first device and the second device.

17. The apparatus according to claim 16, wherein the receiving module is further configured to receive first time information from the second device, wherein the first time information is used to determine a second time difference, and the second time difference is a time interval between a third moment at which the second device receives the first symbol and a fourth moment at which the second device sends the second symbol; and
the processing module is further configured to determine the distance between the first device and the second device based on the first time difference and the second time difference.

18. The apparatus according to claim 16 or 17, wherein the first symbol and/or the second symbol are/is generated based on a ZC sequence, and the ZC sequence is generated in the following manner:

$$d(n) = \begin{cases} exp\left(-j\frac{\pi un(n+1)}{41}\right), n = 0,1,\dots,18 \\ 0, n = 19 \\ exp\left(-j\frac{\pi un(n+1)}{41}\right), n = 20,21,\dots,38 \end{cases},$$

wherein

n represents a subcarrier sequence number, u is a preset value, and d(n) represents a ZC sequence on an n$^{th}$ subcarrier.

19. The apparatus according to claim 18, wherein u is any integer from a to b, a is a positive integer greater than 1, b is a positive integer less than 39, and a is less than b.

20. The apparatus according to any one of claims 16 to 19, wherein the radio frame comprises a G link symbol, an SG symbol, and a T link symbol, or the radio frame comprises a G link symbol, a T link symbol, and an ST symbol; and the first symbol is a G link ranging symbol and the second symbol is a T link ranging symbol, or the first symbol is a T link ranging symbol and the second symbol is a G link ranging symbol, wherein the G link ranging symbol is carried on a resource used to transmit a G link symbol and/or a resource used to transmit an SG symbol, and the T link ranging symbol is carried on a resource used to transmit a T link symbol and/or a resource used to transmit an ST symbol.

21. The apparatus according to any one of claims 16 to 20, wherein when the first symbol and the second symbol are carried on the same radio frame, a switching gap GAP exists between the first symbol and the second symbol.

22. The apparatus according to any one of claims 16 to 20, wherein when the first symbol and the second symbol are carried on the different radio frames, the first symbol is carried on a first radio frame, and the second symbol is carried on a second radio frame, wherein

when the first symbol is carried on the resource used to transmit the G link symbol and/or the resource used to transmit the SG symbol, and the second symbol is carried on the resource used to transmit the T link symbol and/or the resource used to transmit the ST symbol, the first radio frame further comprises a T link symbol, and the second radio frame further comprises a G link symbol; or
when the first symbol is carried on the resource used to transmit the T link symbol and/or the resource used to transmit the ST symbol, and the second symbol is carried on the resource used to transmit the G link symbol and/or the resource used to transmit the SG symbol, the first radio frame further comprises a G link symbol, and the second radio frame further comprises a T link symbol.

23. The apparatus according to any one of claims 16 to 22, wherein the receiving module is further configured to receive the first time information, wherein the first time information is used to determine the second time difference, and the second time difference is the time interval between the third moment at which the second device receives the first symbol and the fourth moment at which the second device sends the second symbol; and the receiving module is further configured to receive first measurement information, wherein the first measurement information indicates a measurement exchange sequence number corresponding to the first time information.

24. The apparatus according to any one of claims 16 to 23, wherein the first symbol is the 1st one of M ranging symbols sent by the first device in the radio frame, the second symbol is the 1st one of N ranging symbols received by the first device in the radio frame, N is a positive integer, and M is a positive integer.

25. The apparatus according to any one of claims 16 to 24, wherein the first moment is a moment at which a starting point of the first symbol arrives at a first antenna connector of the first device, and the second moment is a moment at which a starting point of the second symbol arrives at the first antenna connector; or the first moment is a moment at which a starting point of a cyclic prefix CP of the first symbol arrives at the first antenna connector of the first device, and the second moment is a moment at which a starting point of a CP of the second symbol arrives at the first antenna connector.

26. The apparatus according to any one of claims 16 to 25, wherein the sending module is further configured to send first configuration information to the second device, or the receiving module is further configured to receive the first configuration information from the second device, wherein the first configuration information indicates at least one of the following content: a Transaction ID corresponding to the measurement, an identifier of the radio frame, a first resource that is in the radio frame and that carries the first symbol, and a second resource that is in the radio frame and that is used to carry the second symbol.

27. The apparatus according to claim 26, wherein the first configuration information indicates the first resource and/or the second resource by using a bitmap.

28. The apparatus according to any one of claims 17 to 27, wherein the sending module is further configured to send a third symbol;

the processing module is further configured to determine a third time difference, wherein the third time difference is a time interval between the second moment at which the first device receives the second symbol and a fifth moment at which the first device sends the third symbol;
the receiving module is further configured to receive second time information from the second device, wherein the second time information is used to determine a fourth time difference, and the fourth time difference is a time interval between the third moment at which the second device sends the second symbol and a sixth moment at which the second device receives the third symbol; and
when configured to determine the distance between the first device and the second device based on the first time difference and the second time difference, the processing module is specifically configured to determine the distance between the first device and the second device based on the first time difference, the second time difference, the third time difference, and the fourth time difference.

29. The apparatus according to claim 28, wherein when the first symbol and the second symbol are carried on the first radio frame, the third symbol is carried on the second radio frame; or when the first symbol is carried on the first radio frame, the second symbol and the third symbol are carried on the second radio frame, wherein the second radio frame is located after the first radio frame.

30. The apparatus according to any one of claims 16 to 29, wherein the radio frame further comprises a ranging symbol used to measure a distance between the first device and a third device, or comprises a ranging symbol used to measure a distance between the second device and the third device.

31. A measurement apparatus, comprising a processor and a memory, wherein

the memory stores computer instructions; and
the processor is configured to execute the computer instructions stored in the memory, to enable the communication apparatus to perform the method according to any one of claims 1 to 15.

32. A computer-readable storage medium, storing a computer program or instruction, and when the computer program or instruction is run, the method according to any one of claims 1 to 15 is implemented.

33. A computer program product, comprising a computer program or instruction, and when the computer program or instruction is executed by a processor, the method according to any one of claims 1 to 15 is implemented.

FIG. 1

FIG. 2

First device

Second device

S310: Send a first symbol

S320: Send a second symbol

S330: Determine a first time difference, where the first time difference is a time interval between a first moment at which the first device sends the first symbol and a second moment at which the first device receives the second symbol

S340: Obtain first time information, where the first time information is used to determine a second time difference, and the second time difference is a time interval between a third moment at which the second device receives the first symbol and a fourth moment at which the second device sends the second symbol

S350: Send the first time information

S360: Determine a distance between the first device and the second device based on the first time difference and the second time difference

FIG. 3

FIG. 4

FIG. 5

FIG. 6

...

| | |
|---|---|
| G | |
| G | |
| G | |
| G | |
| SG #0 | |
| GAP | |
| T | First symbol |
| T | |
| T | |
| GAP | |
| G | Second symbol |
| G | |
| G | |
| G | |
| SG #1 | |
| GAP | |
| T | |
| T | |
| T | |
| GAP | |

Radio frame #K

Radio frame #K+1

...

| |
|---|
| G |
| G |
| G |
| G |
| GAP |
| ST #46 |
| T |
| T |
| T |
| GAP |
| G |
| G |
| G |
| G |
| GAP |
| ST #47 |
| T |
| T |
| T |
| GAP |

Radio frame #46

Radio frame #47

Super frame

FIG. 7

First device

Second device

$t_1$

First symbol

$t_3$

$t_4$

$t_2$

Second symbol

FIG. 8

Baseband processor

RF transmit channel

Antenna

RF receive channel

Antenna connector

FIG. 9

| G | G | G | G | SG #1 | GAP | T1 | T2 | T3 | GAP |

... ...

FIG. 10

```
┌──────────┐                                              ┌──────────┐
│  First   │                                              │  Second  │
│  device  │                                              │  device  │
└──────────┘                                              └──────────┘
      │         S310: Send a first symbol                       │
      │─────────────────────────────────────────────────────▶│
      │         S320: Send a second symbol                      │
      │◀─────────────────────────────────────────────────────│
      │         S325: Send a third symbol                       │
      │─────────────────────────────────────────────────────▶│
```

S340: The second device obtains first time information, where the first time information is used to determine a second time difference, and the second time difference is a time interval between a third moment at which the second device receives the first symbol and a fourth moment at which the second device sends the second symbol

S330: The first device determines a first time difference, where the first time difference is a time interval between a first moment at which the first device sends the first symbol and a second moment at which the first device receives the second symbol

S342: The second device obtains fourth time information, where the fourth time information is used to determine a fourth time difference, and the fourth time difference is a time interval between the third moment at which the second device sends the second symbol and a sixth moment at which the second device receives the third symbol

S341: The first device determines a third time difference, where the third time difference is a time interval between the second moment at which the first device receives the second symbol and a fifth moment at which the first device sends the third symbol

```
      │         S350: Send the first time information            │
      │◀─────────────────────────────────────────────────────│
      │         S351: Send the second time information          │
      │◀─────────────────────────────────────────────────────│
```

S370: The first device and the second device determine a distance between the first device and the second device based on the first time difference, the second time difference, the third time difference, and the fourth time difference

FIG. 11

FIG. 12

FIG. 13

```
   ┌──────────┐                                              ┌──────────┐
   │  First   │                                              │  Second  │
   │  device  │                                              │  device  │
   └──────────┘                                              └──────────┘
```

S305: Send a third symbol

S310: Send a first symbol

S320: Send a second symbol

S322: Obtain second time information, where the second time information is used to determine a fourth time difference, and the fourth time difference is a time interval between a fifth moment at which the second device sends the third symbol and a third moment at which the second device receives the first symbol

S321: Determine a third time difference, where the third time difference is a time interval between a sixth moment at which the first device receives the third symbol and a first moment at which the first device sends the first symbol

S340: Obtain first time information, where the first time information is used to determine a second time difference, and the second time difference is a time interval between the third moment at which the second device receives the first symbol and a fourth moment at which the second device sends the second symbol

S330: Determine a first time difference, where the first time difference is a time interval between the first moment at which the first device sends the first symbol and a second moment at which the first device receives the second symbol

S350: Send the first time information

S351: Send the second time information

S370: The first device and the second device determine a distance between the first device and the second device based on the first time difference, the second time difference, the third time difference, and the fourth time difference

FIG. 14

...

Radio frame #K

G
G
G
G
SG #0
GAP
T
T — Third symbol
T
GAP

Radio frame #K+1

G
G
G — First symbol
G
SG #1
GAP
T
T — Second symbol
T
GAP

...

Radio frame #46

G
G
G
G
GAP
ST #46
T
T
T
GAP

Radio frame #47

G
G
G
G
GAP
ST #47
T
T
T
GAP

Super frame

FIG. 15

First device

Third symbol

Second device

$t_5$

$t_6$

$t_{reply2}$

$t_1$

First symbol

$t_{round2}$

$t_3$

$t_{reply1}$

$t_4$

$t_{round1}$

$t_2$

Second symbol

FIG. 16

Apparatus 1700

Transceiver module 1701 —— Processing module 1702

FIG. 17

Apparatus 1800

Memory 1801

Processor 1802

Communication interface 1803

Bus 1804

FIG. 18

## INTERNATIONAL SEARCH REPORT

| | International application No. |
|---|---|
| | **PCT/CN2022/124723** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNKI, CNPAT, WPI, EPODOC: 华为技术有限公司, 距离, 测距, 定位, 时间, 差, 间隔, 无线帧, 双向, 双侧, 双边, 三 S 消息, distance, location, time, difference, interval, two 1w way, double 1w side?, three 1w message

**C. DOCUMENTS CONSIDERED TO BE RELEVANT**

| Category* | Citation of document, with indication, where appropriate, of the relevant passages | Relevant to claim No. |
|---|---|---|
| X | CN 109906642 B (HUAWEI TECHNOLOGIES CO., LTD.) 09 February 2021 (2021-02-09) description, paragraphs [0081]-[0330], and figures 1-17 | 1-12, 15-27, 30-33 |
| Y | CN 109906642 B (HUAWEI TECHNOLOGIES CO., LTD.) 09 February 2021 (2021-02-09) description, paragraphs [0081]-[0330], and figures 1-17 | 13-14, 28-29 |
| Y | CN 113228761 A (SAMSUNG ELECTRONICS CO., LTD.) 06 August 2021 (2021-08-06) description, paragraphs [0143]-[0148], and figures 7-8 | 13-14, 28-29 |
| X | CN 111989592 A (BEIJING XIAOMI MOBILE SOFTWARE CO., LTD.) 24 November 2020 (2020-11-24) description, paragraphs [0057]-[0250], and figures 1-11 | 1-12, 15-27, 30-33 |
| X | CN 111372185 A (UBTECH ROBOTICS INC.) 03 July 2020 (2020-07-03) description, paragraphs [0029]-[0051], and figures 1-2 | 1-12, 15-27, 30-33 |
| X | CN 113366794 A (QUALCOMM INCORPORATED) 07 September 2021 (2021-09-07) description, paragraphs [0103]-[0108], and figure 6 | 1-12, 15-27, 30-33 |
| A | US 2020351815 A1 (LG ELECTRONICS INC.) 05 November 2020 (2020-11-05) entire document | 1-33 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 January 2023** | **28 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/124723**

| Patent document cited in search report | | | Publication date (day/month/year) | Patent family member(s) | | | Publication date (day/month/year) |
|---|---|---|---|---|---|---|---|
| CN | 109906642 | B | 09 February 2021 | WO | 2018082075 | A1 | 11 May 2018 |
| | | | | US | 2019261305 | A1 | 22 August 2019 |
| | | | | JP | 2019536016 | A | 12 December 2019 |
| | | | | CN | 109906642 | A | 18 June 2019 |
| | | | | EP | 3531759 | A1 | 28 August 2019 |
| CN | 113228761 | A | 06 August 2021 | US | 2020200862 | A1 | 25 June 2020 |
| | | | | KR | 20210095131 | A | 30 July 2021 |
| | | | | EP | 3868162 | A1 | 25 August 2021 |
| | | | | WO | 2020130727 | A1 | 25 June 2020 |
| CN | 111989592 | A | 24 November 2020 | WO | 2022011650 | A1 | 20 January 2022 |
| CN | 111372185 | A | 03 July 2020 | US | 2020205115 | A1 | 25 June 2020 |
| CN | 113366794 | A | 07 September 2021 | US | 2020259683 | A1 | 13 August 2020 |
| | | | | AU | 2020218528 | A1 | 19 August 2021 |
| | | | | EP | 3921969 | A1 | 15 December 2021 |
| | | | | JP | 2022519545 | A | 24 March 2022 |
| | | | | WO | 2020163597 | A1 | 13 August 2020 |
| | | | | TW | 202044888 | A | 01 December 2020 |
| | | | | KR | 20210124227 | A | 14 October 2021 |
| US | 2020351815 | A1 | 05 November 2020 | WO | 2019045429 | A1 | 07 March 2019 |

Form PCT/ISA/210 (patent family annex) (January 2015)